# EUROPEAN PATENT SPECIFICATION

(11) **EP 1 016 554 B1**
(45) Date of publication and mention of the grant of the patent: **11.02.2004**
(21) Application number: 97935812.4
(22) Date of filing: 18.08.1997
(51) Int. Cl.: B60C 7/10, B60C 7/00, B60C 11/02, B60B 21/00, B29D 30/02, B29C 33/04, B60C 7/12

(54) **SOLID TIRE**
VOLLREIFEN
PNEUMATIQUE PLEIN

(30) Priority: 22.08.1996 JP 22128296; 06.11.1996 JP 29386696; 13.12.1996 US 766614; 10.04.1997 JP 9182197
(43) Date of publication of application: 05.07.2000
(73) Proprietor: Fukunaga Engineering Co., Ltd., Osaka-shi, Osaka 536 (JP)
(72) Inventor: FUKUNAGA, Muneyasu, Osaka-shi, Osaka 536 (JP)
(74) Representative: Skone James, Robert Edmund
(86) International application number: PCT/JP1997/002861
(87) International publication number: WO 1998/007586

(56) References cited:
- GB-A- 2 238 513
- JP-A- 3 182 809
- JP-A- 7 125 506
- JP-A- 51 038 375
- JP-A- 51 047 003
- JP-A- 51 137 205
- JP-B- 4 022 123
- JP-C- 7 591
- JP-C- 25 028
- JP-U- 4 069 304
- JP-U- 52 171 006
- JP-U- 59 005 404
- JP-U- 59 107 227
- JP-U- 61 031 714
- JP-U- 61 058 102
- JP-U- 63 088 507
- JP-Y- 11 001 782
- JP-Y- 46 016 404
- JP-Y- 55 055 003
- JP-Y- 62 028 481
- NL-A- 7 812 531
- US-A- 4 371 023
- PATENT ABSTRACTS OF JAPAN vol. 1995, no. 08, 29 September 1995 (1995-09-29) & JP 07 125506 A (SUMITOMO RUBBER IND LTD), 16 May 1995 (1995-05-16)

## Description

### BACKGROUND OF THE INVENTION

The present invention relates to a solid tire having a solid resilient member sandwiched between a tread and a wheel, to a tire core, to a tread and to a wheel for use in the solid tire, and further relates to the production process thereof.

### Prior Art

Known as solid tires that are generally free of air leakage or puncture are those obtained by mounting, on the rim of a wheel, a resilient rubber member integrally formed with a tread, or those obtained by stuffing in a tubeless tire a resilient member such as a resilient rubber member.

Such solid tires have a resilient material of high load-bearing capacity, such as a synthetic rubber, retained within the tire. These tires are advantageous over traditional hollow air tires in that they are free of air leakage. They are particularly used in heavy load transporting vehicles or in such a service condition that puncture repairing is difficult.

However, the conventional solid tires are produced by mounting or stuffing, in a tire, a resilient member of a specific compression deformability. Therefore, the resilience of these tires cannot readily be adjusted while it can be done by simply adjusting air pressure of hollow tires. As a result, they cannot sufficiently absorb shocks from a road surface when a heavy load-carrying vehicle is lightly loaded or traveling with no load. Thus, the conventional tires have serious problems such as driver's fatigue.

The inventor of the present invention have disclosed, in Examined Japanese Patent Publication No. 22641/1986, a tired wheel having a tire directly mounted on a wheel rim. This tire is a tired wheel provided with a hollow tire, comprising a plurality of resilient annular members that uprise integrally from either side of the rim of the wheel and are circumferentially spaced from each other. Each of the annular members is made gradually thinner toward the tread.

When a relatively small shock or load is applied to such a tired wheel, the resilient annular members are deformed at their thinner portions, i.e., at the portions near the ridge of the rim so as to absorb shocks. A larger shock or load is absorbed by deformation of the thick portions near the bottom of the rim.

However, since the tired wheel cushions shocks solely by flexible deformation of the resilient annular members, it is difficult to select the material for the resilient members used under larger load conditions. If desired, such a tire can be used with compressed air being charged therein. In this case, however, the tire necessitates repairing when air leakage or puncture occurs.

Similarly, GB-A-2238513 describes a solid insert for air-inflated tires. The insert is made from a closed-cell elastomeric material which expands when subjected to working. In the event of a puncture in the tire, the insert expands to fill the tire cavity, thereby supporting the tire and enabling it to complete the "get home" journey before requiring repair. A solid tire corresponding to the preamble of claim 1 is known e.g. from JP-A-51137205.

### SUMMARY OF THE INVENTION

The object of the present invention is to provide a puncture-free solid tire that has a high resilience comparable to that of a hollow tire with a sufficient load-bearing capacity and especially provide a solid tire that can sufficiently absorb shocks from a road surface even while the vehicle is traveling with no load, thereby preventing driver's fatigue.

In order to achieve the above-mentioned objects, the present invention provides a solid tire comprising an annular resilient core having an outer surface with a tread and an inner surface on which the rim of a wheel can be fitted, the annular resilient core comprising a void portion extending in a circumferential direction of the tire, the void portion being a circumferential groove formed along the ridge of the core and extending along a radial plane of the core, the groove, being located and shaped to enhance resiliency of the tire core against a shock on the ridge of the tire core from a road surface; characterised in that the tread has an inner surface which fits on the outer surface of the core, the side portions of the tread covering about half of either side of the core.

According to the above construction, the tire is constituted by the two separate parts, i.e., the tire core and the tread, so that the tire core has only to function as a resilient member, and on the other hand, the tread has only to function as a ground-engaging member for contact with a road surface. Therefore, it is possible to freely select the material, the shape and the like of the tire core only in light of the function as a resilient member. That is, it is possible to select the shape or the like of the tire core from a wide range and employ various shapes of the void portion as later described without difficulties. As a result, it is possible to provide a solid tire that can exhibit as high a resilience as a hollow tire without compromising a load-bearing capacity and especially provide a solid tire that can sufficiently absorb shocks from a road surface even while the vehicle is traveling with no cargo, thereby preventing driver's fatigue. Further, when the ground-contacting surface of the tread wears away and therefore the tread grooves become shallow, only the tread has to be replaced with a new one, and the tire core can be reused. Therefore,. the solid tire of the present invention is more economical as compared with conventional integrally molded solid tires.

Preferably, the circumferential groove becomes wider toward the rim in the direction of the tire axis. With this construction, when a load is applied to the ridge of the tire core, the portions astride the groove are resiliently deformed as if bent toward the deepest portion of the groove, since the bottom portion of the internal void portion of the groove expands toward the tire axis.

In this case, when a small load is applied, the facing walls of the groove come near or contact each other, that is, the load is cushioned by the deformation of the portions astride the groove. When a larger load is applied at the ridge of the tire core, the tire core is compressedly deformed according to the deformation of the tire while being resiliently deformed toward a deeper portion of the circumferential groove.

Thus, the above-constructed tire core cushions a small load such as a shock applied for a short period of time by the resilient deformation of the portions astride the groove of the tire core and is bent and compressedly deformed within the tire to cushion a large load applied for a long period of time.

Preferably, the circumferential groove engages a projection formed on the inner surface of the tread. With this construction, the projection on the inner surface of the tread engages the circumferential groove of the tire core to reliably prevent the tread from slipping in an axial direction of the tire.

Preferably, the groove is a slit circumferentially extending in the outer surface of the core. With this construction, when a small load is applied on the tire core, the slit helps the tire core deform to cushion the load flexibly and resiliently in such a manner that the facing faces of the slit part from each other (i.e., form a hollow portion) according to the deformation of the tire core. When a larger load is applied, the portion deeper than the slit is compressedly deformed to sufficiently bear the load. If the tire core is provided with only one slit, it tends to deform symmetrically. In such a case, it is preferable that the slit be formed at the ridge of the core.

Preferably, the above tire core comprises a plurality of grooves in the outer surface of the core. With this construction, the plurality of grooves can be deformed flexibly and resiliently to absorb shocks more effectively.

Preferably, the groove is a hollow portion so that the either of the rim-side and tread-side portions of the tire core is thinner than the other. With this construction, when a small load is applied, the thin portion of the tire core, i.e., the rim- or tread- side portion is resiliently deformed to cushion the load. When a larger load is applied, the entire tire core is compressedly deformed within the tire.

As described, any one of the above-constructed tire cores can cushion a small load with low elastic force and can cushion a large load with corresponding elastic force. That is, the tire core can exhibit the most suitable cushing effect in each case.

Preferably, the solid tire core further comprises a filler stuffed in the void portion.

Further, the tire core is preferably separable into a plurality of core parts in the direction of the tire axis. With this construction, the production time is shortened and the production process is simplified. Further, the assembly operation is made efficient.

Preferably, the solid tire further comprises a wire mesh embedded therein for enhancing the stiffness of the inner part of the core. With this construction, the tire core can have an increased strength so as to bear a larger load and is prevented from creeping and being permanently deformed even if a large load is applied for a long period of time.

Preferably, the tire core comprises circumferentially spaced recesses or projections in or on the outer surface for securing the tread on the outer surface of the core. With this construction, it is possible to prevent the abrasion between the outer surface of the tire core and the inner surface of the tread and further prevent generation of frictional heat therebetween.

The solid tire core comprises circumferentially spaced recesses or projections in or on the inner surface for securing the rim on the inner surface of the core. With this construction, even after a long period of use, the wheel reliably engages the tire core so that the tire core does not run idle relative to the wheel. Therefore, drive force can reliably be transmitted from the wheel to the tire core. Also, when the wheel stops, the tire core stops, thereby actuating the brake of a vehicle reliably.

If the solid tire core comprises a plurality of grooves formed in the outer surface of the core for enhancing the resiliency of the outer part of the core, the projections between the grooves contact the inner surface of the tread so as to increase the frictional force between the tire core and the tread, thereby preventing the slippage of the tread relative to the tire core. Therefore, it is possible to prevent the outer surface of the tire core from abrading against the inner surface of the tread and further prevent generation of frictional heat therebetween.

Preferably, the above plurality of grooves are arranged in an axial direction of the tire. With this construction, the frictional force in an rotational direction can be increased between the tire core and the tread, thereby preventing the slippage of the tread relative to the tire core in a rotational direction.

Preferably, the above plurality of grooves are formed circumferentially. With this construction, the frictional force in an axial direction can be increased between the tire core and the tread, thereby preventing the slippage of the tread relative to the tire core in an axial direction.

Preferably, the above plurality of grooves become wider toward the outer surface of the tire core. With this construction, when a load is applied on the tire core, the jutted portions astride the groove are resiliently deformed as if being bent. Therefore, when a small load is applied, the facing inner walls of the groove come near or contact each other. In other words, the portions astride the groove is resiliently bent to cushion the load. When a larger load is applied at the ridge of the tire core, the tire core is compressedly deformed according to the deformation of the tire while being resiliently bent toward a deeper portion of the groove.

Thus, according to the above-constructed tire core, the portions astride the groove is resiliently bent to cushion a small load such as an impact applied for a short period of time, and the entire tire core is bent within the tire to compressedly deform, thereby cushioning and bearing a large load applied for a long period of time.

Since the tread has an inner surface which fits on the outer surface of the solid tire core, when the ground-contacting surface of the tread wears away and the tread grooves become shallow, only the tread has to be replaced with a new one, and the tire core can be reused. Therefore, the solid tire of the present invention is more economical as compared with conventional integrally molded solid tires.

Preferably, the tread comprises recesses or projections formed in or on its inner surface to engage the corresponding projections or recesses formed on or in the solid tire core for securing the solid tire core having circumferential spaced recesses or projections formed on the outer surface so as to secure the tread. With this construction, the tread can be prevented from slipping relative to the tire core, whereby it is possible to prevent the abrasion between the outer surface of the tire core and the inner surface of the tread and further prevent generation of frictional heat therebetween.

The rim may comprise circumferentially spaced stopper members on its outer surface to secure the solid tire core. With this construction, even after a long period of use, the wheel and the tire core securely interlock by means of the stopper members so that the tire core does not run idle relative to the wheel. Therefore, drive force can reliably be transmitted from the wheel to the tire core. When the wheel stops, the tire core stops, thereby actuating the brake mechanism of a vehicle reliably.

Preferably, the above stopper members are recesses or projections formed in or on the outer surface of the wheel in order to secure a tire core having corresponding and circumferentially spaced projections or recesses for securing the wheel on the inner surface of the core. With this construction, the recesses or projections formed in or on the tire core can constantly and securely engage the corresponding recesses or projections formed in or on the tire wheel so that the tire core can more securely be prevented from slipping relative to the wheel. Accordingly, even after a long period of use, drive force can more reliably be transmitted from the wheel to the tire core. When the wheel stops, the tire core completely stops, thereby actuating the brake mechanism of a vehicle more reliably.

Preferably, the above stopper members are sharp-edged plate-like members projecting radially of the wheel. With this construction, when a tire core is mounted on the wheel, the edge portions of the stopper members, i.e., the plate-like members cut into the inner surface of the tire core because of being sharp-edged, so that the wheel completely engages the tire core so as to more reliably prevent the tire core from slipping relative to the wheel, without providing a special stopper member on the tire core. Therefore, drive force can more reliably be transmitted from the wheel to any tire core having no special engaging member. When the wheel stops, the tire core stops completely, thereby actuating the brake mechanism of a vehicle more reliably.

Still another solid tire of the present invention is a solid tire having a tread integrally formed with an annular rubber member of such an inner diameter as to fit on a rim of a wheel, wherein the annular rubber member has a hollow portion so that the rim- or the tread-side portion of the annular rubber member is thinner than the other.

With the above construction, when a small load is applied, the thin portion of the annular robber, i.e., its rim- or tread-side portion is resiliently deformed to cushion the load. When a larger load is applied, the entire annular rubber member is compressedly deformed within the tire. Therefore, the tire can cushion a small load with low elastic force and can cushion a large load with corresponding elastic force, whereby the tire core can exhibit the most suitable cushioning effects in each case.

Preferably, a wire mesh embedded is in the annular rubber member for enhancing the stiffness of the inner part of the annular rubber member. With this construction, the annular rubber member can have an increased strength so as to bear a large load and is prevented from creeping and being permanently deformed even if a large load is applied for a long period of time.

Preferably, the solid tire comprises circumferentially spaced recesses or projections in or on the inner surface of the annular rubber member in order to secure a wheel. With this construction, the annular rubber member can be prevented from slipping relative to the wheel, whereby it is possible to prevent the wheel from abrading against the inner surface of the annular rubber member and further prevent generation of frictional heat therebetween.

Further, the method of producing the tire core of the solid tire comprises:
a first step of preparing, as the parts of the tire core, i) a base portion corresponding to the inner portion of the tire core and ii) first and second resilient halves obtained by separating the outer portion along a plane crossing the rotational axis of the tire;
a second step of placing the first resilient half and the base portion in a first mold having the shape corresponding to one half piece made by separating the tire core along a separating plane crossing a rotational axis of the tire;
a third step of positioning, in the first mold, an intermediate mold of the shape corresponding to that of the void portion, the intermediate mold comprising a plurality of separate molds sectioned along a radial direction of the solid tire;
a forth step of placing the second resilient half on the first resilient half;
a fifth step of positioning a second mold to the first mold and the intermediate mold where the first and second resilient halves and the base portion are placed, the second mold being of the shape corresponding to that of the remaining half of the tire core;
a sixth step of vulcanizing the first and second resilient halves and the base portion placed in the first and second molds and the intermediate mold; and
a seventh step of taking out the vulcanized tire core from the first and second molds and the intermediate mold.

With the above production method, after the resilient halves and the base portion are bonded to each other on their contact surfaces, the intermediate mold can be removed separately as a plurality of separate molds, whereby it is possible to produce the tire core having the circumferential groove or the slit with ease. Further, since the intermediate mold is inserted into the central portion of the tire core, the inside of the tire core can be heated directly by the intermediate mold in the vulcanizing step. Accordingly, it is possible to heat the entire tire core in a short time. As a result, the vulcanizing time is shortened to thereby shorten the overall production time.

Preferably, the plurality of separate molds each comprise an engaging member for engaging an adjacent separate mold. With this construction, the separate molds engage each other at the engaging portion, so that even if the second mold is pressed during the vulcanizing step to therefore press the intermediate mold, the intermediate mold will not be deformed to form the circumferential groove or the slit with high accuracy.

Preferably, the plurality of separate molds comprise three separate molds obtained by equally and radially dividing the intermediate mold into three parts. With this construction, the respective separate molds have the same shape and can be used as the same separate mold. Also, the adjacent connecting portion between the separate molds exists only in one direction, as viewed from the center of the intermediate mold, the intermediate mold has an increased strength. Therefore, the intermediate mold is further made difficult to deform, thereby forming the circumferential groove or the slit with higher accuracy.

Preferably, the above separate molds each comprise recesses or projections for securing at least one of the first and second molds, wherein the at least one of the first and second molds comprises recesses or projections for engaging the recesses or the projections formed in or on the separate molds. With this construction, it is possible to accurately place the intermediate mold relative to the first or second mold, thereby producing a tire core with high accuracy.

The other method of producing a tire core of the solid tire comprises:
a first step of preparing, as the parts of the tire core, a base portion corresponding to the inner portion of the tire core and a resilient portion corresponding to the outer portion of the tire core;
a second step of sandwiching and positioning the base portion between a first mold and a second mold in the axial direction of the tire, which molds form a molding space corresponding to at least a part of the base portion when mated together;
a third step of placing the resilient portion on the base portion placed in the first and second molds;
a forth step of positioning a third mold and a forth mold over the first and second molds where the base portion and the resilient portion are placed, the third and forth molds making an annular hollow portion corresponding to the outer portion of the tire core when the molds are mated together and being separable along a plane extending along the rotational axis of the tire;
a fifth step of vulcanizing the resilient portion and the base portion placed in the first to fourth molds; and
a sixth step of taking out the vulcanized tire core from the first to fourth molds.

According to the above production process, only using the four molds, i.e., the third and fourth molds having the shape corresponding to one half piece of the tire core with the groove or the slit being formed therein, the half piece being obtained by sectioning the tire core along the tire axis, and the first and second molds for positioning the base portion, it is possible to produce the tire core of complicated shape, i.e, the tire core having the circumferential groove or the slit with ease. Further, since the mold has the shape corresponding to one half piece of the tire core with the circumferential groove or the slit being formed therein, the half piece being obtained by sectioning the tire core along the tire axis, it is possible to form the circumferential groove or the slit with high accuracy. Further, since the parts, which have the shapes corresponding to the circumferential grooves and slits of the third and fourth molds, are inserted into the central portion of the tire core, the inside of the tire core can be heated directly during the vulcanizing step. Accordingly, it is possible to heat the entire tire core in a short time. As a result, the vulcanizing time is shortened to thereby shorten the entire production time.

### BRIEF DESCRIPTION OF THE DRAWINGS

Fig. **1** is a sectional view of a first embodiment;
Fig. **2(a)** is a partially cutaway side view of a tire core of the first embodiment;
Fig. **2(b)** is a sectional view of the same taken along line II-II of the first embodiment;
Fig. **3(a)** is a partially cutaway side view of a tread of the first embodiment;
Fig **3(b)** is a sectional view of the same taken along line III-III of the first embodiment;
Fig. **4** is a sectional view of a second embodiment;
Fig. **5** is a sectional view of a third embodiment;
Fig. **6** is a partial sectional view of a fourth embodiment;
Fig. **7** is a partial sectional view of a fifth embodiment;
Fig. **8** is a partial sectional view of a sixth embodiment;
Fig. **9** is a partial sectional view of a seventh embodiment; and
Fig. **10** is a partial sectional view of an eighth embodiment;
Fig. **11** is a sectional view of a ninth embodiment;
Fig. **12(a)** is a partially cutaway side view of the tire core of the ninth embodiment;
Fig. 12 (b) is a sectional view taken along line IV-IV of the tire core of the ninth embodiment;
Fig. **13(a)** is a partially cutaway side view of the wheel of the ninth embodiment;
Fig. **13(b)** is a sectional view taken along line V-V of the wheel of the ninth embodiment;
Fig. **14(a)** is a partially cutaway side view of another wheel comprising a stopper member;
Fig. **14(b)** is a sectional view taken along line VI-VI of another wheel comprising the stopper member;
Fig. **15** is a sectional view of a tenth embodiment;
Fig. **16(a)** is a partially cutaway side view of the tire core of the tenth embodiment;
Fig. **16(b)** is a sectional view taken along line VII-VII of the tire core of the tenth embodiment;
Fig. **17** is a schematic sectional view for explaining a tire core production process;
Fig. **18** is a plan view for explaining the structure of the intermediate mold;
Fig. **19(a)** is a sectional view showing a first shape of a connecting portion of separate molds;
Fig. **19(b)** is a sectional view showing a second shape of a connecting portion of separate molds;
Fig. **19(c)** is a sectional view showing a third shape of a connecting portion of separate molds;
Fig. **20(a)** is a sectional view showing a first example of the cross section of separate molds constituting the intermediate mold;
Fig. **20(b)** is a sectional view showing a second example of the cross section of separate molds constituting the intermediate mold;
Fig. **20(c)** is a sectional view showing a third example of the cross section of separate molds constituting the intermediate mold;
Fig. **21(a)** is a first sectional view for explaining another production process, illustrating tire core parts;
Fig. **21(b)** is a second sectional view for explaining another production process, illustrating tire core parts;
Fig. **21(c)** is a third sectional view for explaining another production process, illustrating tire core parts;
Fig. **22** is a schematic sectional view for further explaining the other producing process of the tire core.

### DETAILED DESCRIPTION OF THE PREFERRED EMBEDMENT

Embodiments of the present invention will now be described below with reference to the accompanying drawings.

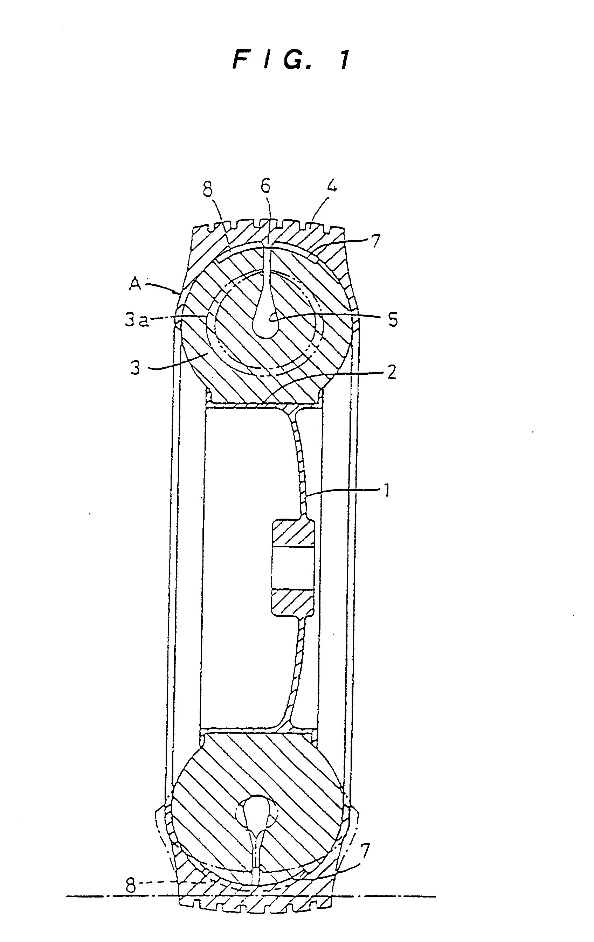

Figs. **1 - 3** show a first embodiment of the present invention, i.e., a solid tire **A** constituted by covering a rubber tire (hollow tire), i.e, a tread **4** on an annular resilient member, i.e., a tire core **3** of an inner diameter to fit on a rim **2** of a wheel **1**. The tire core **3** has a circumferential groove **5** that extends circumferentially along the ridge of the tire core. The circumferential groove 5 is made wider toward the rim like a sector. The wheel 1 of Fig. 1, although illustrated as one part to facilitate explanation, comprises a detachable ring part (a spring-like part with a cut) for securing the tire core 3 on a flange portion of the wheel, like conventional wheels. When assembling, the tire core 3 is fit on the wheel 1 with the ring part detached, and then the ring part is placed in the annular groove provided on the wheel 1 for securing the tire core 3. The later-mentioned embodiments (excluding those with separable wheels) have similar structures.

The tire core **3** is made of a resilient material having a suitable bending modulus and a suitable resilient compression deformability according to the intended use, and the material is not specifically limited. For example, urethane rubber or the like is a preferred material for obtaining the bending modulus and resilient compression deformability since curing and/or foaming agents are suitably selected for adding. In the following embodiments, the above resilient material can be used likewise.

The depth of the circumferential groove **5** is not limited to the illustrated example. That is, the bottom of the groove **5** may be located closer to the rim **2** than to the tread **4** of the tire, or may be closer to the tread **4** than to the rim **2**. By varying the depth of the groove **5** as mentioned above, it is possible to adjust the bending strength and deformability of the tire core **3** according to the intended use of the solid tire.

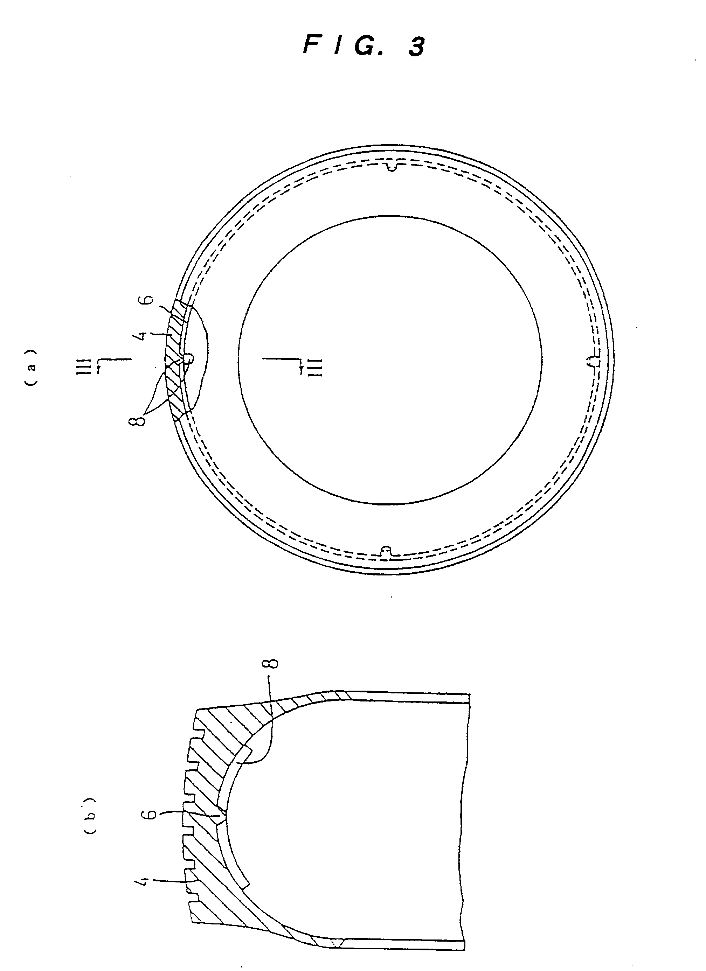

As shown in Figs. **1** and **3**, according to the first embodiment, formed on the inner surface of the tread **4** is a rib **6** received in the circumferential groove of the tire core **3**, and thus reliably preventing the tire core **3** from displacing in an axial direction of the tire.

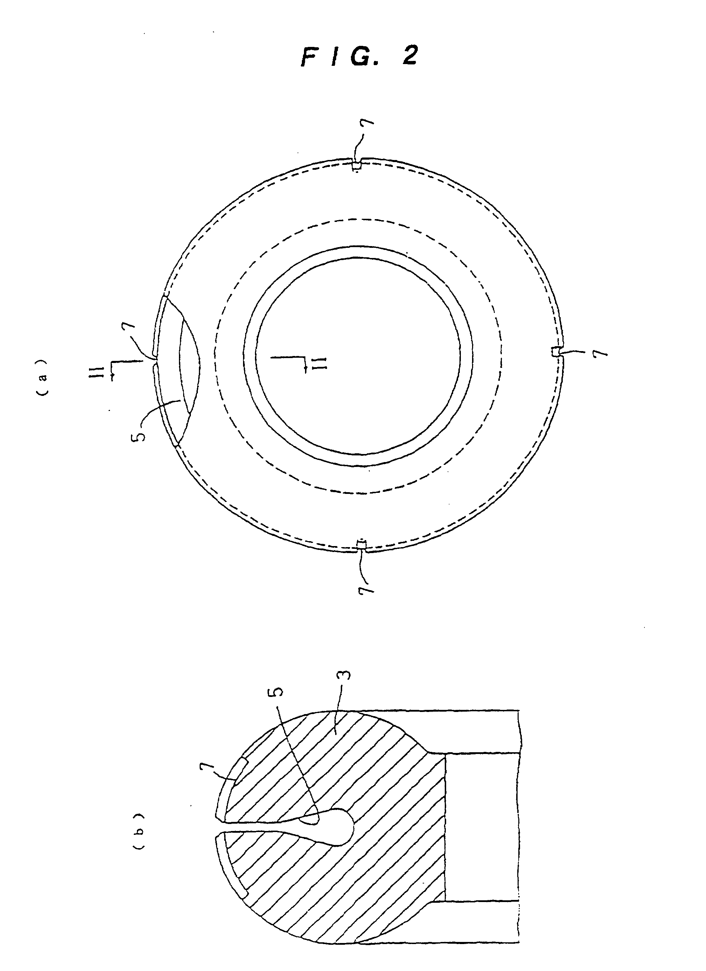

As shown in Figs. **1** and **2**, formed in the outer surface of the tire core **3** are four elongated recesses **7** that extends axially of the tire and are circumferentially spaced at 90° angular intervals. Further, as shown in Figs. **1** and **3**, formed on the inner surface of the tread **4** are four ribs **8** located and shaped to fit in the recesses **7**.

With this construction, the tread **4** can be prevented from slipping relative to the tire core **3** that rotates with the rim **2**, and therefore the friction therebetween and frictional heat can also be prevented. The numbers, locations, shapes of the stopper members, i.e., the recess **7** and the rib **8**, are not limited to the above, and another number, location and shape may also be employed so long as the tread **4** can be prevented from slipping relative to the tire core **3**.

The solid tire **A** is constructed by covering the tire core **3** with the tread **4**. Therefore, only the tread **4** can be replaced with a new one when it wears. In this respect, the solid tire of the present invention is economically used as compared with conventional integrally molded solid tires. Since the side portions of the tread **4** cover only about half of either side of the tire core **3**, the tread **4** can be fitted on or removed from the tire core **3** with relative ease.

When a load is applied at the ridge of the tire core **3** of the thus-constructed solid tire of the first embodiment, the portions astride the groove **5** are resiliently bent toward the internal void portion to come near each other as indicated by an alternate long and short line in the lower part of Fig. **1**. When a larger load is applied at the ridge of the tire core **3,** the tire core **3** is compressedly deformed on the tread **4** while being resiliently bent toward a deeper portion of the circumferential groove **5**.

Accordingly, the above-constructed solid tire can achieve the most suitable cushioning effect in each case, that is, the solid tire can cushion a small load with low rigidify and bear a larger load with high rigidity. More specifically, the solid tire has the advantage of bearing a large load and, at the same time, absorbing small vibrations caused by small undulations on a road surface during traveling of a vehicle, so that such vibrations will not be transmitted to the vehicle body.

If the above-constructed solid tire is subjected, for a long period of time, to such a large load that the tire core **3** may be deformed at a deformation rate of 10 - 20% or more, the core **3** might suffer plastic (permanent) deformation. However, under a normal load condition, the tire would rarely be deformed at such a deformation rate. Further, it cannot actually be considered that a vehicle be left with such a large load for many days. A substantially annular spring **3a** (Fig. **1**) of steel etc. having an arcuate cross section may be embedded in the tire core **3** to enhance the resilient deformation strength of the tire core **3**. With this case, even if a load acts on the tire core **3** for a long period of time and causes the rubber portion of the core **3** to creep, the spring **3a** of a metal material such as steel hardly creeps, so that the tire core **3** does not suffer permanent deformation. Therefore, even after a long period of use, the entire solid tire is not permanently deformed and therefore maintains its original resilient properties, thereby enhancing reliability of the solid tire.

Further, according to the above embodiment, the tire core **3** is provided with the circumferential groove **5** so as to obtain a suitable resilience. However, after the circumferential groove **5** is formed, a filler may be placed in the groove **5**. Usable as the filler is a soft material such as cellular rubber or foamable rubber so as not to impair the resilience of the tire core **3**. In this case, no foreign material, such as earth, sand, etc., enters the circumferential groove **5** since the groove **5** is filled with the filler. Therefore, the tires is prevented from getting out of balance during traveling of a vehicle, or the tire core is not damaged by foreign materials, whereby reliability for a solid tire is enhanced. Furthermore, since the filler and the tire core **3** are bonded to each other, much pressure is not applied at the edges of the circumferential groove **5** of the tire core **3**, whereby no cracking will occur in the edges of the circumferential groove **5** of the tire core **3**. This effect is particularly remarkable for a tire core **14** provided with a slit **15** later-described. In this case, a circumferential hollow portion **16** can be omitted. The above filler can also be employed in solid tires **B - J** later described to obtain the same effect.

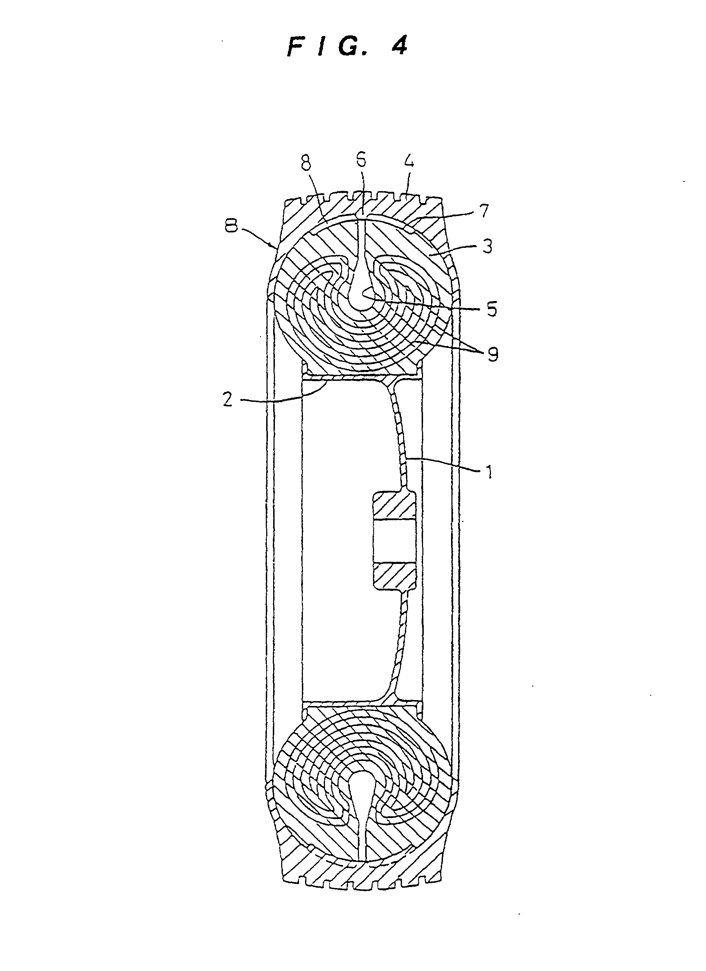

Fig. **4** shows a second embodiment of the present invention, i.e., a solid tire **B** of comprises, in addition to the construction of the first embodiment, a wire mesh **9** embedded in the tire core **3** extending circumferentially extending therein. The wire mesh **9** is preferably embedded extending around the inner end of the groove **5** on the side nearer to the rim **2** and piled with several piles of the mesh. Useable as the wire mesh **9** is a conventional wire mesh that is ordinarily used in a steel radial tire. With this construction, the tire core **3** is reinforced near the rim **2**, thus enabling the solid tire **B** to bear a larger load. Further, even if a load acts on the tire core **3** for a long period of time, the wire mesh **9** of a metal material such as steel hardly creeps. Therefore, the tire core **3** is hardly deformed permanently and can maintain its original resilient properties even if used for a long period of time, thereby enhancing reliability of a solid tire.

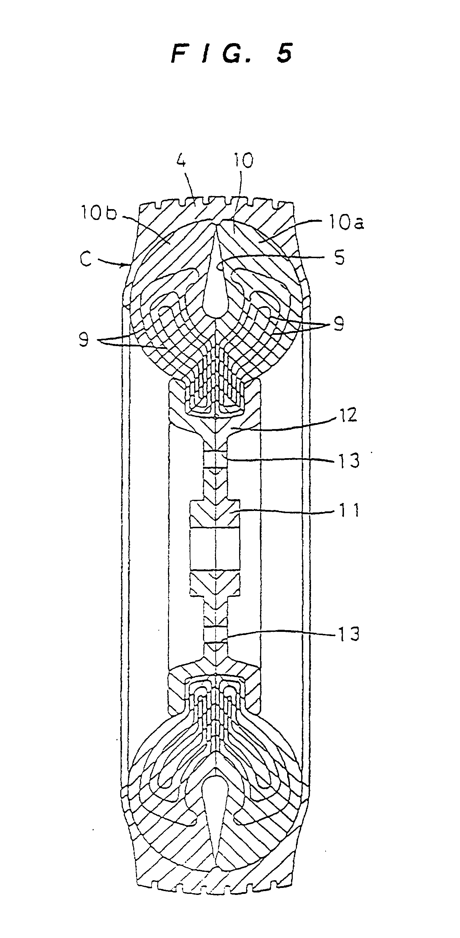

As shown in Fig. **5**, a solid tire **C** of the third embodiment comprises, in addition to the construction of the first embodiment, a tire core **10** of two core parts **10a** and **10b** separating along a median plane extending radially of the tire, each part having a wire mesh **9** embedded therein.

By use of the tire core **10** consisting of two or more parts separating along a radial plane of the tire, it is possible to reduce the vulcanizing time of the core parts **10a** and **10b**, thereby reducing the entire production time. Further, the core parts **10a** and **10b**, each having a circumferential groove **5,** can readily be taken out from a mold, whereby the core parts **10a** and **10b** can more simply be produced. Further, the tire core **10** can readily be fitted in the tread **4**, thereby improving the assembly operation. To assemble a plurality of parts to the tire core **10**, a wheel **11** is firstly made by placing two disks on each other with the parts **10a** and **10b** being mounted on the rim **12,** and then fastening them with bolts and nuts inserted in bolt holes **13.** Conventional means such as bonding may also be employed to combine the core parts **10a** and **10b**.

The wire mesh **9** of the solid tire **C** is circumferentially embedded in each part of the tire core **10**, and the density of the wire mesh **9** is high near the rim **12** of the tire core **10** so as to provide an excellent mechanical strength against deformation. Further, the density of the wire mesh of the tire core **C** becomes gradually higher toward the rim of the tire core **10**. Therefore, it is possible to increase the strength of only the rim-side portion of the tire core **10** without varying the resilient properties of the tread-side portion of the tire core **10** to a large extent.

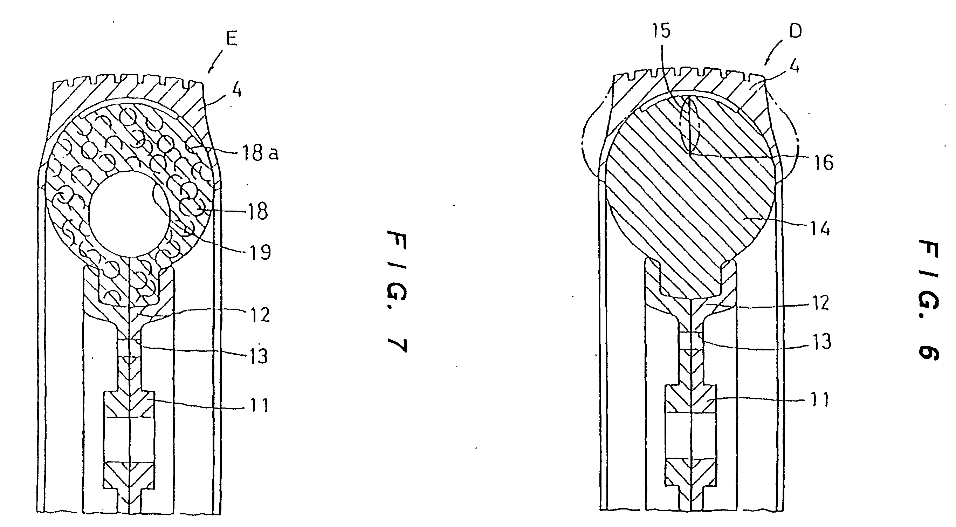

Fig. **6** shows a fourth embodiment, i.e., a solid tire **D** constituted by covering a tire core **14** with a tread **4** (hollow tire), the core **14** having slit **15** that circumferentially extends in the outer surface of the core along its ridge. In the following description, the same elements as in the third embodiment are denoted by the same reference numerals and the explanations therefor are omitted.

The slit **15** is usually about 1 - 10 mm wide, but may be a mere cut as made by, e.g., a knife. It is preferable that a hollow portion **16** of circular cross section be formed at the deepest portion of the slit **15** so as to avoid cracking.

When a relatively small load is applied on the tread **4** and the outer portion of the tire deforms as indicated by alternate long and short lines in Fig. **6**, the slit **15** helps the tire core **14** deform softly and resiliently. This is because the facing faces of the slit **15** part from each other according to the deformation of the tread **4** and the tire core **14** to thereby form a hollow portion therebetween. When a larger load is applied on the tread **4**, deformation occurs both in the slit **15** and the entire tire core **14** to bear the larger load.

Fig. **7** shows a fifth embodiment, i.e., a solid tire **E** constituted by covering an tire core **18** with a tread **4,** the tire core **18** having an annular hollow portion 19 therein that has a circular cross section and circumferentially extends so that the remaining rim-side portion of the tire core **18** is thinner than the tread-side portion.

The solid tire E has a special feature because of the special shape of the tire core **18** that has the hollow portion **19** as described. When a momentary small load such as a shock is applied, the thin portion of the tire core **18**, i.e. the rim-side portion, is resiliently deformed to cushion the shock. When a large load is applied for a long period of time, the entire tire core **18**, including the tread-side thick portion, is compressedly deformed to bear the load. The cross section of the hollow portion **19** is not limited to such a circular shape as shown in Fig. **7**, but may be another such as an elliptic or sector shape.

In order to enhance the load-bearing capacity of the tire core **18**, a substantially annular spring **3a** (Fig. **1**) of a metal such as steel used in the above-described first embodiment or a wire mesh may be embedded in the tire core **18**. For the same purposes, metal springs of conventional shape, glass fiber, cloth, carbon fiber or fiber-reinforced resin or the like may be admixed together to form the tire core **18**. The reference numeral **18a** in Fig. **7** denotes a spiral or bow-shaped metal solid wire obtained by untwisting a wire rope of steel or a special steel. The thickness and length of the wire may suitably be selected depending on the required load-bearing capacity of the solid tire. Useable is a spiral or bow-shaped wire of 1 - 2 cm long in perimeter, for example.

The spiral or bow-shaped wire is employed because it can follow the deformation of the elastic rubber forming the tire core, as compared with a linear wire. More specifically, when the elastic rubber is deformed, the linear wire can not follow the deformation of the elastic rubber and is therefore separated therefrom. On the other hand, the spiral or bow-shaped wire can follow the deformation of the elastic rubber because of being flexible, whereby the separation can be prevented.

By use of such a reinforcing member, it is possible to prevent the permanent deformation of the tire core **18** due to the application of a large load to thereby improve the load-bearing-capacity of the core and increase the toughness of a resulting tire. Further, even when a load acts on the tire core **18** for a long period of time and causes the rubber portion of the tire core **18** to creep, the wire **18a** of a metal such as steel hardly creeps, whereby the tire core **18** does not suffer permanent deformation. Therefore, even after a long period of use, the solid tire maintains its original shape and resilient properties, thereby enhancing reliability of a solid tire. The reinforcement as mentioned above can also be applied to any embodiment of the present invention comprising a tire core or a annular rubber member.

In the case of producing a tire core comprising a hollow portion as mentioned above, the tire core **18** may consist of two parts separating along a median plane extending radially of the tire as in the third embodiment, i.e., the solid tire **C** shown in Fig. **5**. In this case, too, the vulcanizing time of the tire core **18**, for example, can be shortened, whereby the entire production time can also be shortened. Further, the mold for forming the hollow portion **19** can be taken out with ease, whereby the hollow portion can be formed with ease, and therefore the tire **18** can more readily be produced.

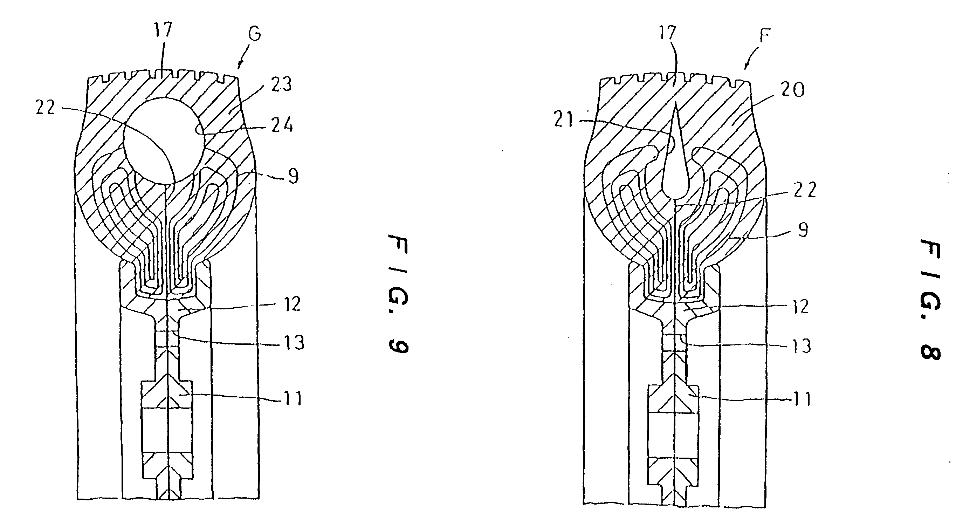

Fig. **8** shows a sixth embodiment of the present invention, i.e., a solid tire **F** constituted by integrally forming a tread **17** on an annular rubber member **20**. The annular rubber member **20** has a hollow portion **21** of a substantially sector-shaped cross section so that the tread-side portion of the member **20** is thinner than the rim-side portion. The hollow portion **21** is arranged to extend circumferentially through the member **20.**

Fig.**9** shows a seventh embodiment of the present invention, i.e., a solid tire **G** constituted by integrally forming a tread **17** on the outer surface of the annular rubber member **23**. The annular rubber member **23** has a annular hollow portion **24** having a circular cross section therein, so that the remaining tread-side portion of the annular rubber member **23** is thinner than the rim-side portion. The annular hollow portion **24** is arranged to circumferentially extend through the rubber member **23.**

According to the embodiment shown in Figs. **8** and **9,** the following benefits are obtained. When a small load such as a shock or the like is applied to the solid tire **F** or **G**, the thin portion of the annular rubber member **20** or **23**, i.e., the tread-side portion is resiliently deformed to cushion the load. When a larger load is applied, the entire rubber member **20** or **23**, including the rim-side thick portion, is resiliently deformed to cushion the load. The cross section of the hollow portion **21** or **24** is not limited to the sector-shape or the circular shape as shown in Fig. **8** or Fig. **9**, but may be another such as an elliptic shape. Further, the sixth or seventh embodiment has a separating line **22** extending from the deepest point of the substantially sectoral or circular hollow portion **21** or **24** to the rim **12**, so that it is possible to form the hollow portion **21** of a substantially sectoral cross section or the hollow portion **24** of circular section using a mold, whereby the production process is simplified. Therefore, according to the sixth or seventh embodiment, a lower cost solid tire can be provided since the number of parts is reduced and the production process is simplified.

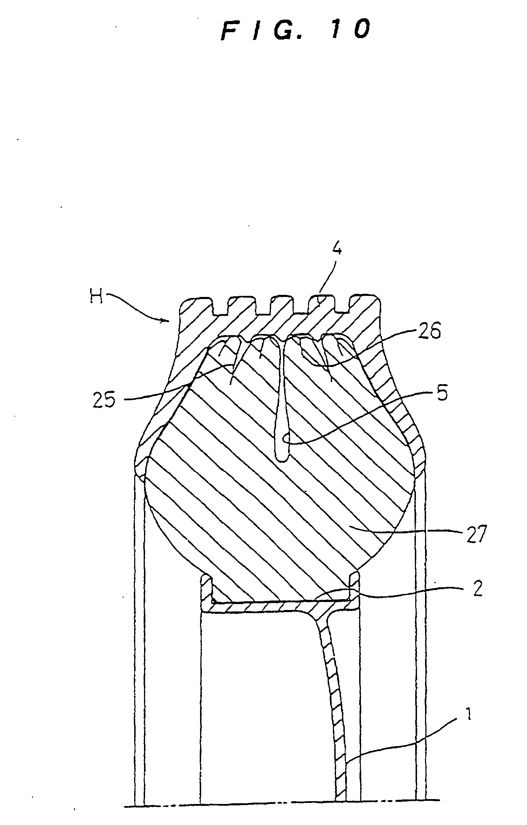

Fig. **10** shows an eighth embodiment of the present invention, i.e., a solid tire **H** comprising a plurality of long and short slits **25** and **26** formed in the outer surface of the tire core **27** on either side of the circumferential groove **5**. In this case, when a load is applied at the ridge of the tire core **27**, the rubber portions astride the circumferential groove **5** are resiliently bent toward the internal void portion to come near each other. Further, the long and short slits **25** and **26** are deformed flexibly and resiliently toward the circumferential groove **5** according to the deformation of the tread **4** and the tire core **27**. On the other hand, when a larger load is applied at the ridge of the tire core **27**, the tire core **27** is compressed-and resiliently deformed toward a deeper portion of the circumferential groove **5**. Therefore, the tire core can cushion a small load with low rigidity to more effectively absorb a shock compared with the afore-mentioned embodiments and can absorb a large load with high rigidity. In other words, the tire core can exhibit the most suitable cushing effect in each case.

The long and short slits **25** and **26** are usually about 1 - 10 mm wide, but may be a mere cut. It is preferable that a hollow portion of circular cross section (not shown) be formed at the deepest portion of the slits **25** and **26** so as to avoid cracking. Further, the long and short slits **25** and **26** are used not only in combination with the circumferential groove **5** as in this embodiment, but also be used singularly if the shape, number and location are changed suitably. Also, it is possible to combine the slits suitably with the slits shown in Fig. **6** or the hollow portion **19** shown in Fig. **7** or the like.

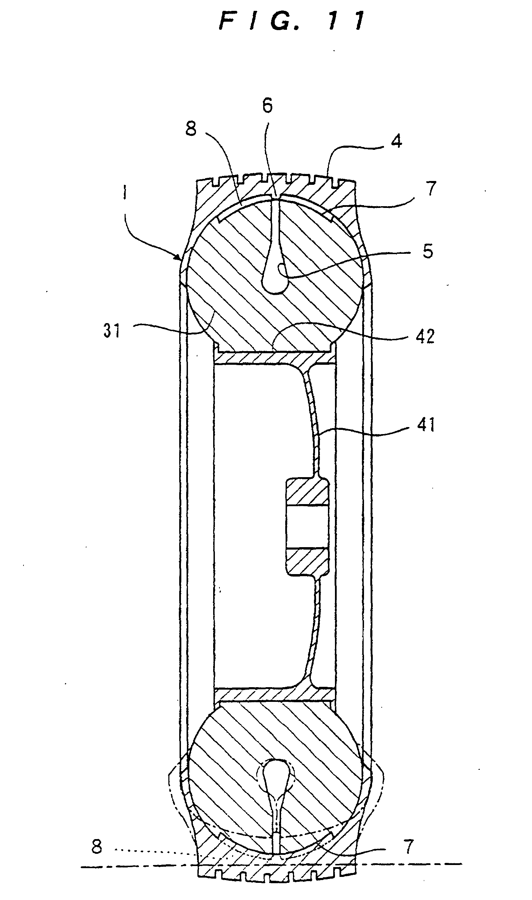

Figs. **11** to **13** show a ninth embodiment of the present invention, i.e., a solid tire **I** constituted by covering a tire core **31** with a tread **4** as in the first embodiment, the tire core **31** being of such a diameter as to fit on the rim of a wheel **41**. In the following description, the same elements as in the first embodiment are denoted by the same reference numerals, and the explanations therefor are omitted.

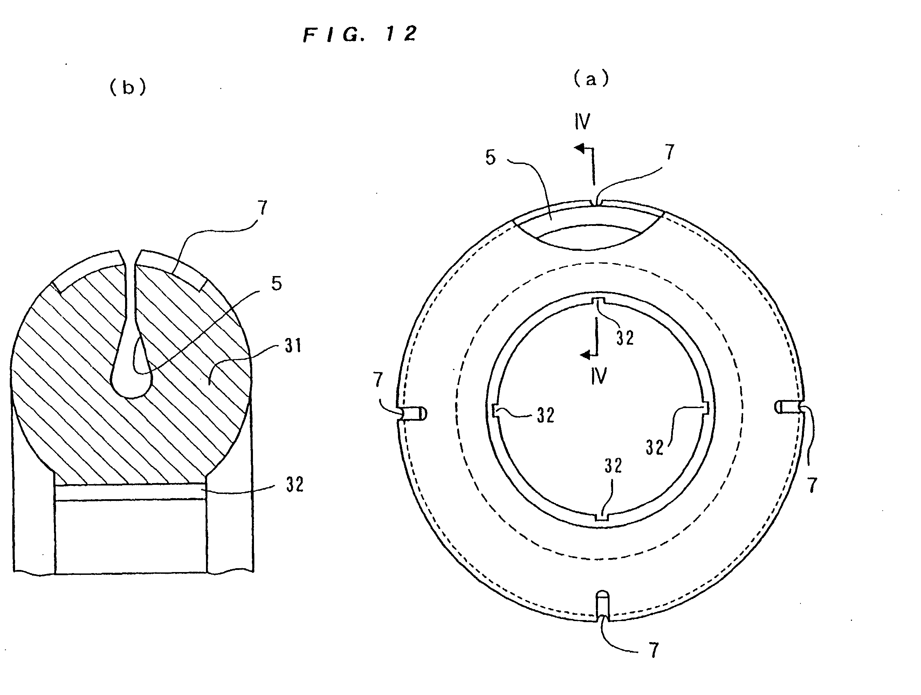

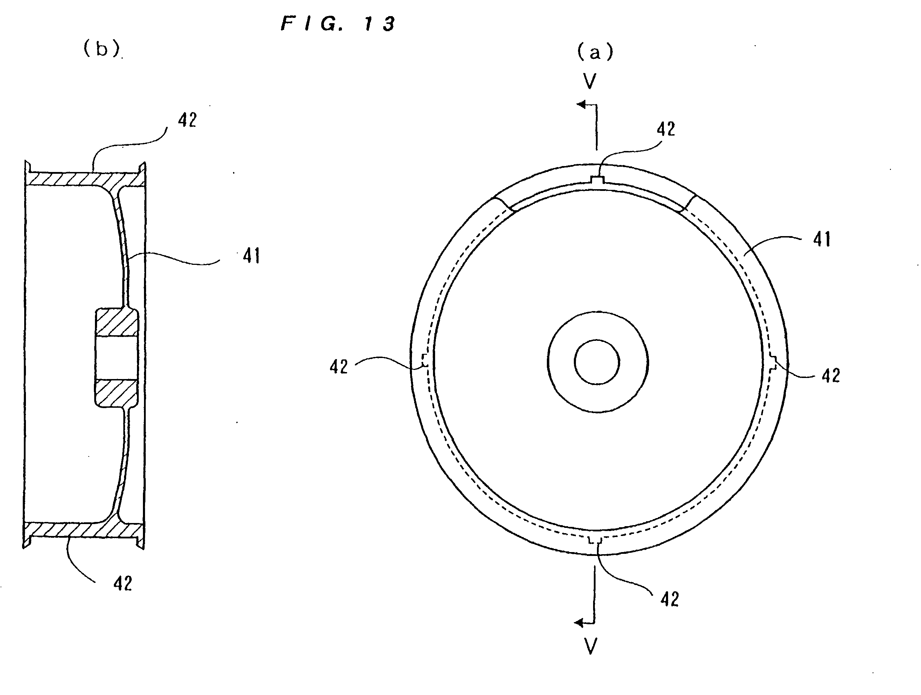

As shown in Figs. **11** and **12**, formed in the inner surface of the tire core **31** are four elongated recesses **32** that extend in an axial direction of the tire and are circumferentially spaced at 90° angular intervals. Further, as shown in Figs. **11** and **13**, formed as stopper members on the outer surface of the rim of the wheel **41** are four projections **42** that are located and shaped to fit in recesses **32**.

In this case, even after a long period of use, the projections **42** on the wheel **41** securely engage the recesses **32** in the tire core **31**, so that the tire core **31** does not run idle relative to the wheel **41**. Therefore, drive force can reliably be transmitted from the wheel **41** to the tire core **31** and the tread **4**. Further, when the wheel **41** stops, the tire core **31** and the tread 4 stop, thereby actuating the brake mechanism of a vehicle reliably. The numbers, locations and shapes of the securing recess **32** and projections **42** are not limited to the above-mentioned, but may be any number, location and shape, so long as the tire core **31** can be prevented :from slipping relative to the wheel **41**.

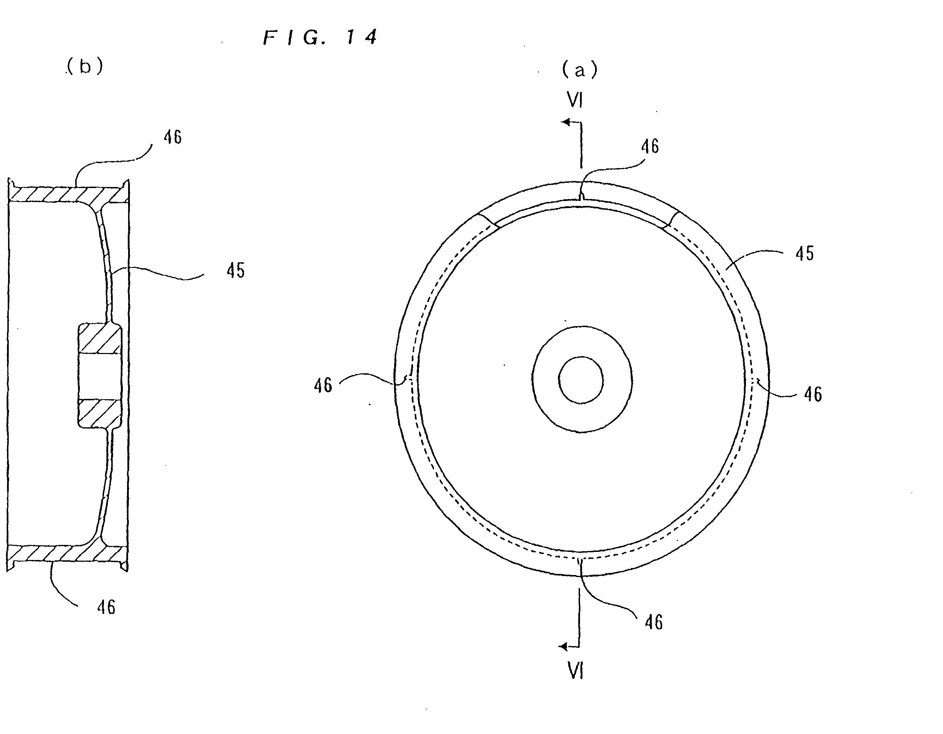

Next, explanation will be given of another solid tire wheel having stopper members for securing a tire core. As shown in Fig. **14**, formed on the outer surface of the rim of a solid tire wheel **45** are four sharp-edged plate-like members **46** that project radially of the wheel **45** and extends axially of the tire and are circumferentially spaced from each other at 90 angular intervals. Useable as a tire core to fit on the wheel **45** is the tire core **3** shown in Fig. **1** or the like. In this case, the projection **32** shown in Figs. **11** and **12** is unnecessary. Useable as a tread is the tread **4** to fit on the tire core **3** or the like.

The height of the plate-like member **46** may, for example, be 5 - 20 mm, and can suitably be determined depending on the diameter of a tire or the like. Further, the edge of the plate-like member **46** is sharp-edged like a cutter. When the tire core is mounted on the wheel **45**, the edge portion of the plate-like members **46** cut into the inner surface of the tire core made of a elastic rubber. Therefore, the plate-like members **46** of the wheel **45** completely engage the tire core, so that the tire core can reliably be prevented from slipping relative to the wheel **45** even after a long period of use. As a result of this construction, drive force can reliably be transmitted from the wheel **45** to any one of the above-mentioned tire cores having no special stopper member. Also, when the wheel **45** stops, the tire core stops completely, thereby actuating the brake mechanism of a vehicle more reliably. The number, location and shape of the plate-like member **46** as stopper members are not limited to the above-mentioned, but may be any number, location and shape so long as the tire core can be prevented from slipping relative to the wheel **45**.

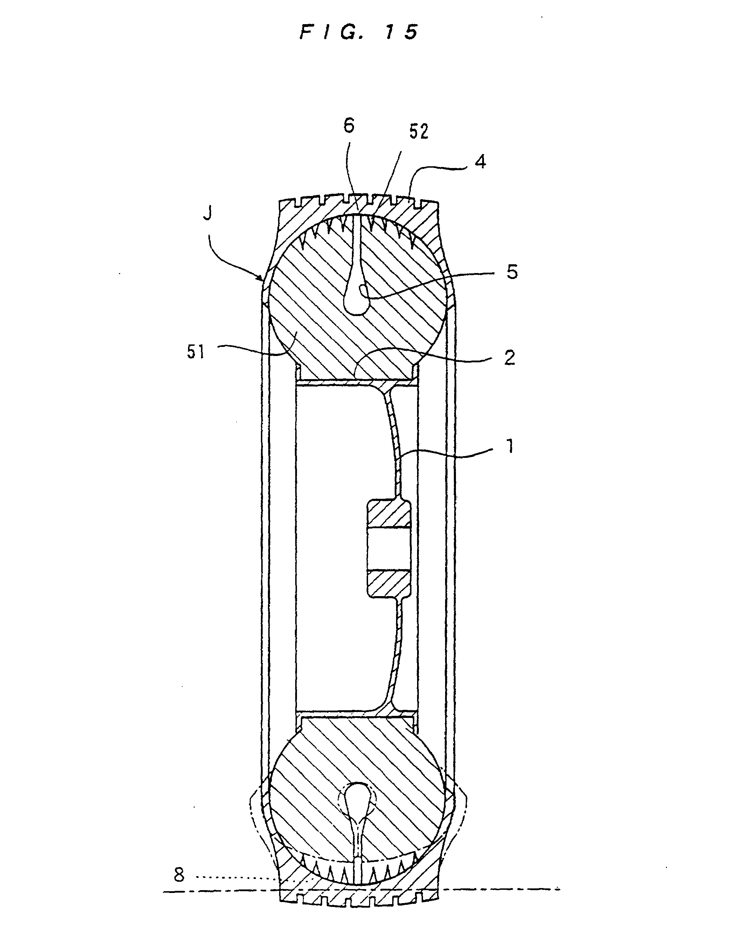

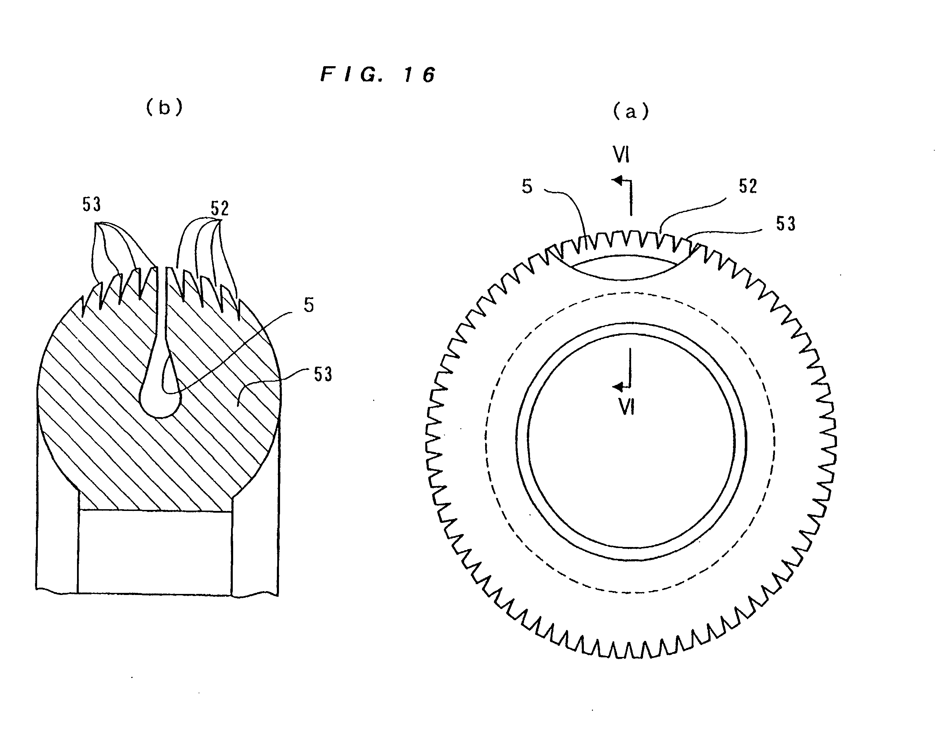

Figs. **15** and **16** show a tenth embodiment of the present invention, i.e., a solid tire J comprising a plurality of intersecting grooves **52**, i.e., grooves extending circumferentially and grooves extending axially in the outer surface of a tire core **51.** These plurality of grooves **52** are arranged on either side of the circumferential groove **5**. In the following description, the same elements as in the first embodiment are denoted by the same reference numerals, and the explanations therefor are omitted.

In this embodiment, projections **53** between the grooves **52** contact the inner surface of the tread 4 so as to increase the frictional force between the tire core **51** and the tread **4**, whereby the tread **4** can be prevented from slipping relative to the tire core **51**. Therefore, it is possible to prevent the abrasion between the outer surface of the tire core **51** and the inner surface of the tread **4** and further prevent generation of frictional heat therebetween.

When a load is applied at the ridge of the tire core **51**, the upper portions astride the circumferential groove **5** are bent toward the internal void and are further resiliently deformed to come near each other. Further, the plurality of grooves **52** are resiliently and flexibly deformed toward the circumferential groove **5** according to the deformation of the tread **4** and the tire core **51**. Next, when a larger load is applied at the ridge of the tire core **51**, the tire core **51** is compressed and resiliently deformed toward a deeper portion of the circumferential groove **5**. Therefore, the tire core can cushion a small load with low rigidity to more effectively absorb a shock, and can absorb a large load with high rigidity. In other words, the tire core can exhibit the most suitable cushing effect in each case.

The plurality of grooves **52** may be arranged only in an axial direction of the tire. In this case, the frictional force in a rotational direction of the tire can be increased between the tire core **51** and the tread **4**, whereby the tread **4** can be prevented from slipping relative to the tire core **51** in a rotational direction of the tire more effectively. Further, the plurality of grooves **52** may be arranged only in a circumferential direction. In this case, the frictional force can be increased between the tire core **51** and the tread **4** in an axial direction of the tire, whereby the tread **4** can be prevented from slipping relative to the tire core **51** in an axial direction of the tire more effectively.

Further, the plurality of grooves **52** preferably become wider toward the outside. In this case, when a load is applied on the tire core **51**, the rubber portions astride the grooves **52** are more easily and resiliently deformed to bend. Therefore, when a small load is applied, the inner walls of the adjacent projections **53** come near or contact each other. In other words, the projections between the grooves are resiliently deformed to exhibit a cushioning effect. Next, when a larger load is applied at the ridge of the tire core **51**, the tire core **51** is resiliently deformed toward a deeper portion of the groove **52**, and at the same time, is compressed according to the deformation of the tire. In this example, the cross section of the groove **52** is wedge-shaped, but may be another shape such as inverted trapezoid. However, in the case of employing a wedge-shape, it is preferable to provide a hollow portion of circular arc cross section (not shown) at the deepest portion of the groove **52** so as to avoid cracking. Further, the plurality of grooves **52** is not only used in combination with the circumferential groove **5** as in this embodiment, but also may be used alone by changing the shape, number and location suitably. Further, it is also possible to suitably combine the grooves **52** with the slits **16** shown in Fig. **6** or the hollow portion **19** shown in Fig. **7** or the like.

Thus, the above-mentioned solid tires **A - J** exhibit advantageous cushioning effects due to the special shapes of the respective tire cores or annular rubber members. Each tire can cushion a small load with low rigidity and can absorb a large load with corresponding rigidity. In other words, each tire can exhibit the most suitable cushing effect in each case.

The maximum widths of the groove **5**, the slit **16** and the hollow portion **19** of the above solid tires **A - E** and **H - J,** i.e., the maximum widths in the direction of the tire axis, are preferably above 0 % but not more than 30 % of the maximum widths of the substantially circular cross section, taken along an axial direction of the solid tires **A - E** and **H - J**, of the solid tire core **3, 10a, 14, 18, 27, 31** and **51**, more preferably above 0 % but not more than 20 % thereof. Further, the maximum depths of the groove **5**, the slit **16** and the hollow portion **19** of above solid tires **A - E** and **H - J**, i.e., the maximum lengths in a direction perpendicular to an axial direction of the tire (i.e, in a direction from the tread to the wheel) are preferably above 15 % but not more than 67 % (one-third) of the maximum lengths of the substantially circular cross section, taken along an axial direction of the solid tires **A - E** and **H - J,** of the solid tire core **3, 10a, 14, 18, 27, 31** and **51,** more preferably above 15 % but not more than 50 % thereof. The circumferential groove or the like is preferably formed at least in the thickest portion in an axial direction of the tire of the cross section taken along an axial direction of the tire, since the thickest portion bears the maximum load applied on the solid tire. In this case, the portions on either side of the groove, the slit or the hollow portion form substantially triangular or sectorial shape, i.e., a part of an equally divided circle into four, in the cross section taken along a rotational axis of the tire. When a load is applied, the tire core is firstly deformed at the tread-side peak'of the tire core, i.e., the narrowest portion of the tire core in the axial direction of the tire, and successively toward the inside the tire core, so that the tire core can cushion a small load with low elastic force and can absorb a large load with high elastic force. In other words, the tire can exhibit the most suitable cushing effect in each case. The foregoing can also be applied to the hollow portion **21** and the annular hollow portion **24** provided in the annular rubber member **20** and **23** of the solid tires **F** and **G**.

Further, the groove **5** and the slit **16** of the solid tires **A - D** and **H - J** are preferably formed from the topmost portion of the tread-side portion of the respective tire cores. With this construction, the portions astride the groove or the slit can independently be deformed. When the tread steps on a pebble or the like on its one side, for example, only the one side portion of the tire core is flexibly deformed to thereby absorb the shock.

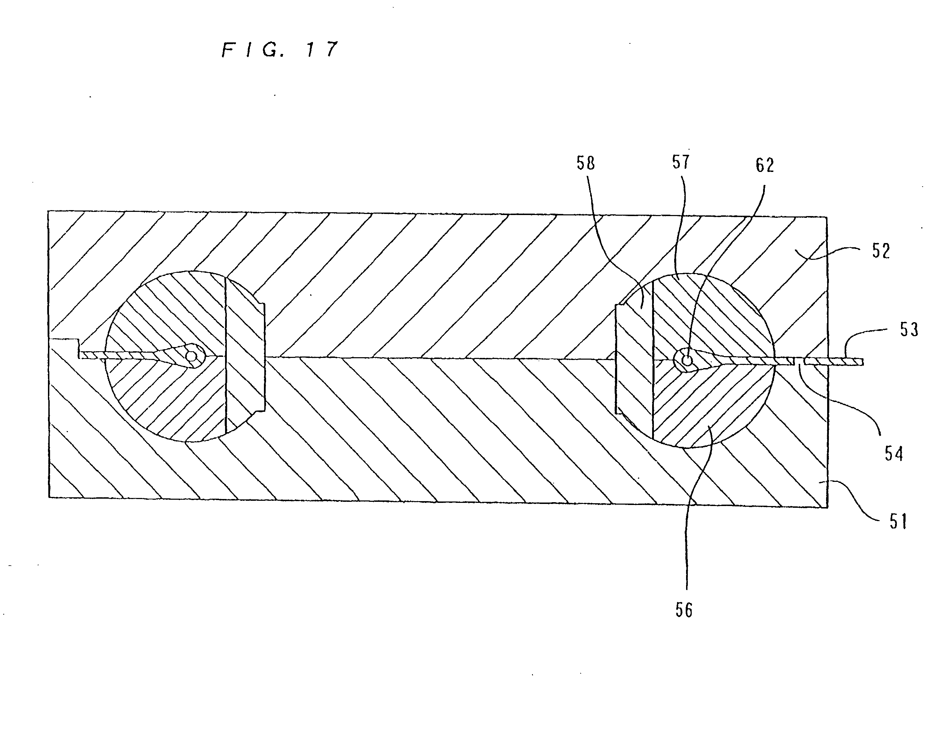

Next, explanation will be given of the method for producing the above-described solid tire cores. Explained as an example is the method of producing the tire core **3** for the solid tire **A.** Fig. **17** is a schematic sectional view for explaining a method for producing a tire core. In the following description, the recess **7** or the like is not mentioned for the simplicity of explanation, but may be formed by adding a corresponding shape to the later-mentioned male and female molds.

As shown in Fig. **17**, produced as the parts of the tire core **3** are a base portion **58** corresponding to the inner portion of the tire core **3** and resilient halves **56** and **57** separating along a line crossing the tire axis, the resilient halves corresponding to the outer portion of the tire core **3**. These parts are of unvulcanized rubber and produced according to the conventional method for producing solid tires. The reason for employing separate parts in this example, i.e., the resilient halves **56** and **57** and the base portion **58**, to form the tire core **3** is that the base portion **58** has to be made stiff by embedding a bead filler of steel wires or the like to firmly fix to the rim of the wheel, and that the resilient halves **56** and **57** have to hold the above-mentioned resilient properties. In other words, there is a difference in resilience between the base portion and the resilient halves. The reason for separating the resilient halves **56** and **57** along a line crossing the tire axis is to facilitate provision of the circumferential groove 5. The number of separate parts for the tire core is not limited to the above, and may be two or another.

Next, prepared is a male mold **51** having the shape corresponding to one half piece obtained by sectioning the tire core **3** along a separating line crossing the tire axis. The resilient half **56** and the base portion **58** are placed in the male mold **51**. Then, positioned in the male mold **51** is an intermediate mold **53** of the shape corresponding to that of the circumferential groove **5** of the tire core **3**.

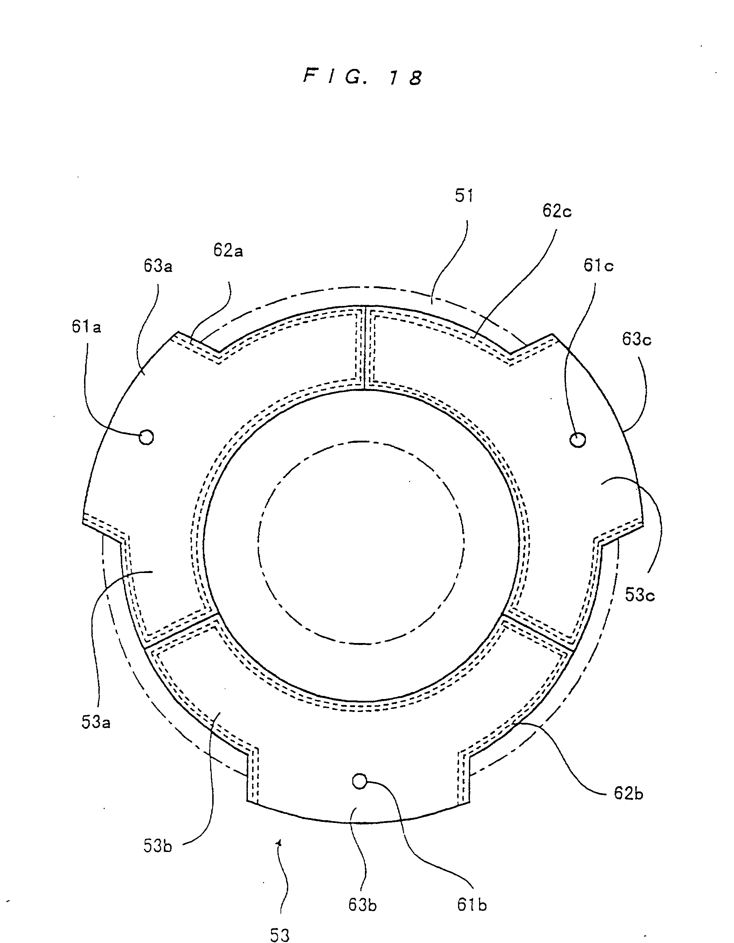

The intermediate mold **53** will now be described in detail. Fig. **18** is a plan view for explaining the structure of the intermediate mold **53**. As shown in Fig. **18**, the intermediate mold **53** is constituted by three separate molds **53a - 53c** obtained by equally dividing the intermediate mold 53 in the radial direction of the tire at 120°angular intervals. Therefore, the respective separate molds **53a - 53c** have the same shape, allowing three equal molds to be used as the separate molds **53a - 53c.** The intermediate mold **53** are not only of the three sectioned type as above, but also may be of the another number sectioned type. Further, the intermediate mold does not have to be sectioned equally.

Useable as the material for the separate molds **53a-53c** are a metal such as Al, Cu and Fe. Al has a high heat conductivity and is therefore preferably used to shorten the time required for the later described vulcanizing step. Further, embedded along the peripheries of the respective separate molds **53a - 53c** are pipes **62a - 62c** through which fluid flows so as to facilitate heating in the vulcanizing step. Water having a raised boiling point, for example, sulfur added water is supplied into the pipes **62a - 62c** after being heated to a temperature suitable for the vulcanizing step, whereby the inside of the tire core 3 can be heated in a short time to a temperature suitable for the vulcanizing step. Therefore, the vulcanizing time can be further shortened using the pipes **62a - 62c.** However, if the separate molds **53a - 53c** are made hollow, their structural strength decrease. Accordingly, it is preferable that the pipes **62a - 62c** are provided slightly inside the outermost portions of the separate molds **53a - 53c.**

The separate molds **53a - 53c** are provided with recesses, i.e., positioning holes **61a - 61c,** respectively. On the other hand, the male mold **51** is provided with three projections **54** (see Fig. **17**) for engaging the positioning holes **61a - 61c** to position the separate molds **53a - 53c** relative to the male mold **51.** Therefore, the separate molds **53a - 53c** can accurately be positioned relative to the male mold 51 by the positioning holes **61a - 61c** and the recesses **54,** whereby the circumferential groove **5** can be formed in the tire core **3** with high accuracy. Conversely, it is also possible to form recesses in the male mold **51** and projections on the separate molds **53a - 53c** so long as the separate molds **53a - 53c** can accurately be positioned relative to male mold **51.** The numbers, locations and shapes of the positioning recesses and projections are not specifically limited.

Formed on the peripheries of the separate molds **53a -53c** are extensions **63a - 63c** that extend radially beyond the outermost circumference of the male mold **51** (indicated by an alternate long and short dash line in Fig. **18**). Therefore, even after all the molds are mated, the separate molds **53a -53c** can readily be handled owing to the extensions **63a - 63c,** whereby the production process is facilitated. Without using the above positioning holes **61a - 61c,** the male and female molds **51** and **52** may be positioned relative to the separate molds **53a - 53c** by the extensions **63a - 63c.** Further, the shape of the extensions **63a - 63c** can suitably be varied according to the shape or the like of the vulcanizing machine.

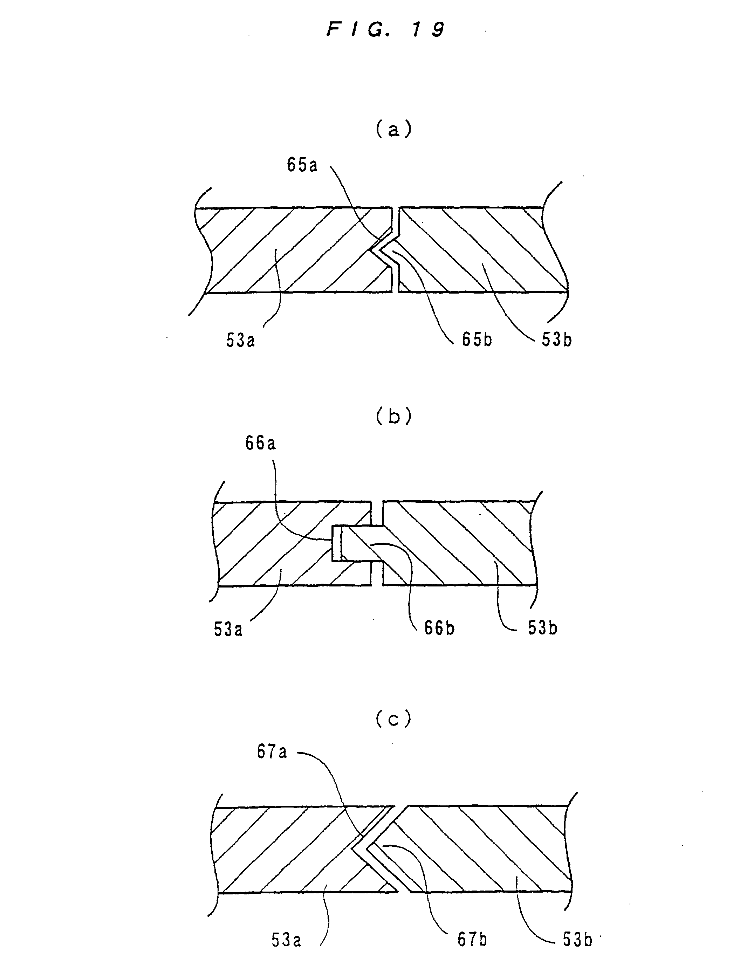

Fig. **19** is a cross section showing the shape of the connecting portion between the separate molds. As shown in Fig. **19(a)**, formed in one end of the separate mold **53a** is a triangular engaging recess **65a**. Formed on the facing end of the separate mold **53b** is a triangular projections **65b** correspondingly located and shaped to engage the recesses **65a**. Similar recesses or projections as above are provided on or in the ends of the respective separate molds **53a - 53c.** The recesses and projections engage each other so that the three separate molds **53a - 53c** are mated to form a substantially doughnut-shaped intermediate mold **53.** Therefore, since the recesses and projections of the three separate molds **53a - 53c** firmly mesh with each other to maintain the form of the intermediate mold **53**, the intermediate mold **53** will not be deformed, even if the female mold **52** is pressed in the later-described vulcanizing step to therefore press the intermediate mold **53.** Further, since the separate molds **53a - 53c** are obtained by equally and radially sectioning the intermediate mold **53**, there is no separating line extending across the intermediate mold **53** in a radial direction. Accordingly, the intermediate mold **53** has an increased strength against a bending force applied vertically thereon. As a result, the groove **5** can be formed in the tire core **3** with high accuracy. Various shapes can be selected for the engaging recesses and projections. For example, they may be rectangular as in Fig.**19(b)** or may be tapered as in Fig. **19(c),** so long as the form of the intermediate mold **53** can be maintained.

Turning back to Fig. **17,** after the intermediate mold **53** is positioned, the resilient halve **57** is placed. Lastly, the female mold **52** is positioned. Next, with the resilient halves **56** and **57** and the base portion **58** being placed, the male mold **51**, the female mold **52** and the intermediate mold **53** are positioned in a vulcanizing machine (not shown) for molding under a predetermined pressure and temperature. As a result, the resilient halves **56** and **57** and the base portion **58** are bonded to each other on their contact surfaces to produce the complete form of the tire core **3**, and the vulcanized resilient halves **56** and **57** have their resilient properties adjusted, thereby completing the tire core **3** having the above-mentioned resilient properties.

After completion of the vulcanizing step, the female mold **52** is taken off from the male mold **51**, and then the resulting tire core **3** is taken out from the lower mold **51** with the intermediate mold **53** being still placed therein. Lastly, the three separate molds **53a - 53c** are removed from the tire core **3**. By the foregoing production process, the tire core **3** having the circumferential groove **5** can be produced.

As described above, after the resilient halves **56** and **57** and the base portion **58** are bonded to each other on their contact surfaces, the intermediate mold **53** can be removed separately as the three separate molds **53a - 53c,** whereby it is possible to remove the separate molds **53a - 53c** from the tire core **3** and produce the tire core **3** having the circumferential groove **5** with ease. Further, since the intermediate mold **53** is inserted into the central portion of the tire core **3**, the inside of the tire core can be heated directly by the intermediate mold **3** during the vulcanizing step. Accordingly, it is possible to heat the entire tire core in a short time. As a result, the vulcanizing time is shortened to thereby shorten the entire production time.

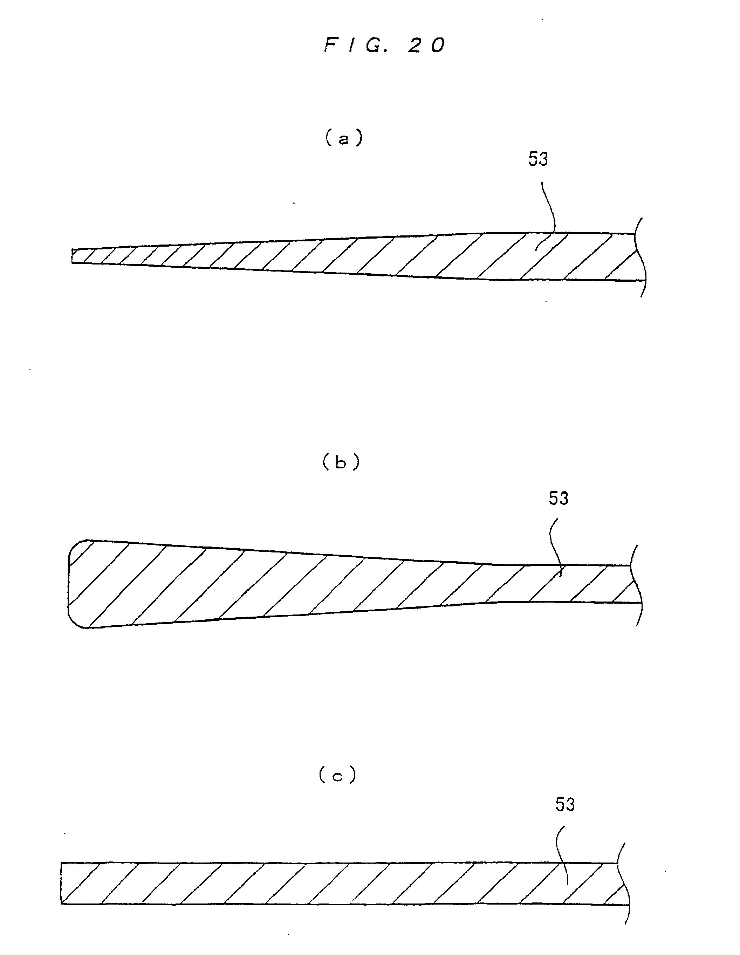

Explanation has been give of the method of producing the tire core **3** provided with the circumferential groove **5**, but the tire core **14** or the like having a slit **15** can also be produced in the same manner by changing the cross section of the intermediate mold suitably. Fig. **20** is a cross section showing examples of the cross sections of the separate molds of the intermediate mold **53**. Useable as the cross section of the intermediate mold **53** are a taper shown in Fig. **20(a)**, an inverted-taper shown in Fig. **20(b),** a rectangle shown in Fig. **20(c)**, etc., according to the desired shape of the grooves or slits to be formed on the tire core.

Further, by changing the shapes of the respective molds suitably, it is possible to produce the tire core **18** having the annular hollow portion **19**, the annular rubber member **20** having the hollow portion **21**, the annular rubber member **23** having the annular hollow portion **24**, the tire core **27** having the circumferential groove **5**, long and short slits **25** and **26** and the like in the same manner as the above production method.

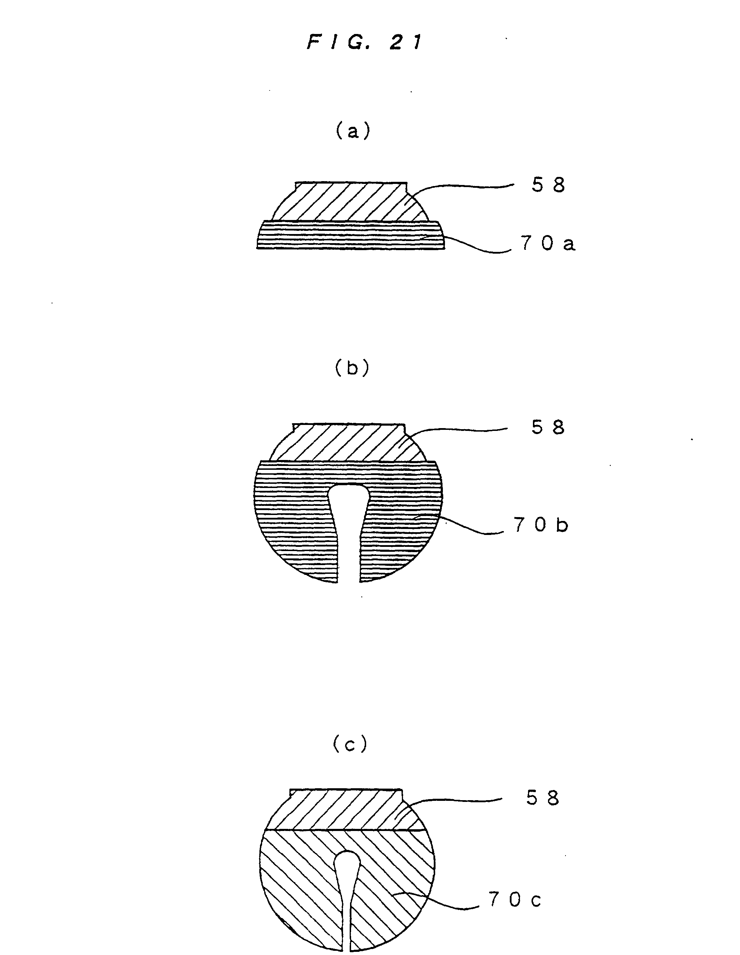

Next, explanation will be given of another method for producing the above tire core. Fig. **21** is a cross section of a tire part for explaining another method of producing the tire core. Explained as one example hereinbelow is a method for producing the tire core **3** of the solid tire **A** as in the above embodiment.

Firstly, an unvulcanized base portion **58** is prepared as a part of the tire core **3** as in the above production process, and then attached to the rotational shaft of a tire molding machine. Next, the rotational shaft is rotated to wind up a sheet of unvulcanized or partly vulcanized elastic rubber to be attached to the inner surface of the base portion **58** to form a resilient portion **70a** that corresponds to the outer portion of the tire core **3** as shown in Fig. **21(a)**. Next, by continuously rotating the shaft to further wind the sheet of elastic rubber, a resilient portion **70b** of laminated elastic rubber sheet is formed as shown in Fig. **21(b)**. Turning to the shape of the resilient portion **70b**, the circumferential groove thereof is made wide so that the above-mentioned intermediate mold **53** can readily be inserted thereinto. Further, in order to mold the tire core to a final shape (as shown in Fig. **21(c)**) in the later-described vulcanizing step, a resilient portion **70c** is made wide correspondingly to the increased width of the circumferential groove.

Next, the tire core parts shown in Fig. **21(b)** are placed in the male mold **51**, the female mold **52** and the intermediate mold **53**, respectively, as in the above production process, and then are molded by a vulcanizing machine under a predetermined pressure and temperature. As a result, the base portion **58** and the resilient portion **70b** of an elastic rubber sheet are bonded to each other to form the shape of a tire core, thereby completing a tire core made up of the base portion **58** and the resilient portion **70c** as shown in Fig. **21(c)**. Therefore, according to this method, it is possible to achieve the same effect as in the above method using the above resilient halves **56** and **57**, and at the same time, to insert the intermediate mold with further ease since the width of the circumferential groove is wider than that of the intermediate mold before the tire core being vulcanized.

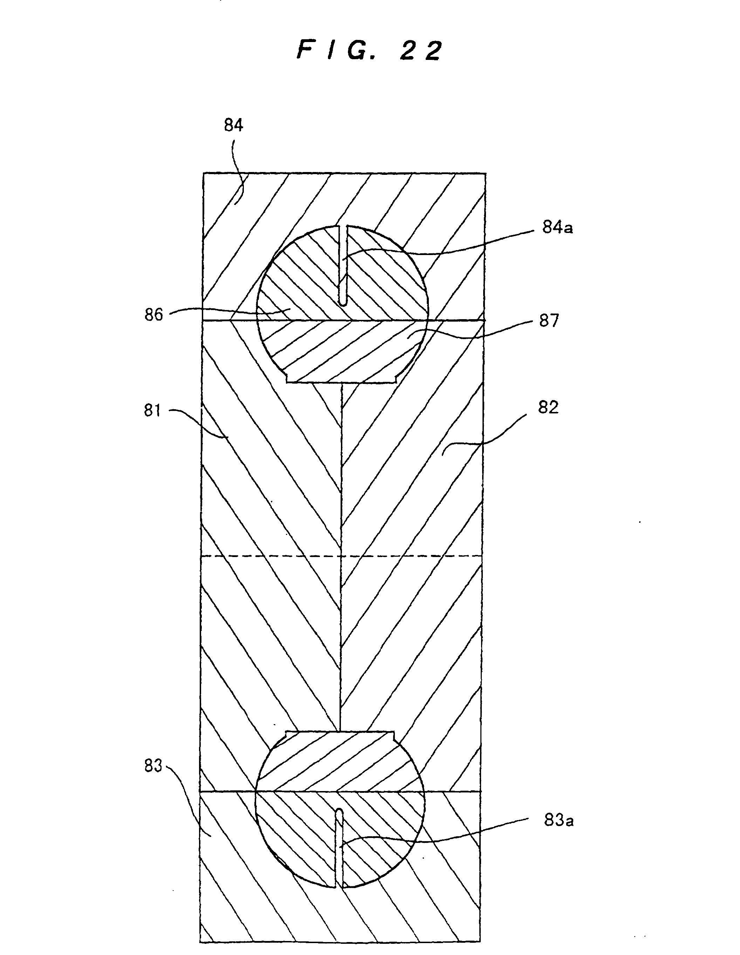

Next, explanation will be given of still another method of producing the above solid tire core. Explained as one example hereinbelow is a method for producing a solid tire core having a slit. Fig. **22** is a schematic cross section explaining the method of producing a tire core. In the following explanation, the recess or the like for engaging the tread is not mentioned for the simplicity of explanation, but may be formed by adding a corresponding shape to third and fourth molds later-described.

As shown in Fig. **22**, base portion **87** is first prepared as a part of the tire core **3** in the same manner as a conventional production process of cores of solid tires. The base portion **87** corresponds to the inner portion of the tire core **3**. The rest of the tire core other than the base portion **87**, i.e., the resilient member **86** corresponding to the outer portion of the tire core **3** is produced using almost the same molds as the first to fourth molds later-described (different in that they have no portion corresponding to the base portion **87**) in the same manner as a conventional production process of cores of solid tires. The reason for employing separate parts, i.e., the resilient member **86** and the base portion **87** in this example is that the base portion **87** has to be made stiff by embedding a bead filler of steel wires or the like to firmly engage with a rim of a wheel, and that the resilient member **86** have to exhibit the above-mentioned resilient properties. In other words, there is a difference in resilience between both. The number of separate parts of the tire core is not limited to the above, and may be three or another.

Next, the base portion **87** is sandwiched, positioned and secured between the first and second molds **81** and **82** in the direction of tire axis. In this embodiment, the first and second molds have the same shape of combined cylinders having different diameters. Useful as the first and second molds are those obtained by further sectioning the first and second molds **81** and **82** into two parts along an axial direction of the tire. Next, the resilient portion **86** is placed relative to the base portion **87** secured by the first and second molds **81** and **82** in such a manner that the resilient portion **86** contact a predetermined portion of the outer surface of the base portion **87**.

Next, prepared are a third mold **83** and a fourth mold **84** which make an annular hollow portion corresponding to the outer portion of the tire core when the molds are mated together. These molds **83**, **84** are separable at a plane extending along a rotational axis of the tire (the chain line in Fig. **22** indicates the separating line between the third mold **83** and the fourth mold **84**). The third and fourth molds **83, 84** are positioned relative to the first and second molds **81** and **82** in which the base portion **87** and the resilient portion **86** are positioned. Since the third and fourth molds **83, 84** are provided integrally with intermediate mold parts **83a, 84a** of semi-circular shape corresponding to that of a slit formed in the tire core, the intermediate mold parts **83a, 84a** are prevented from shifting relative to the third mold **83, 84** or being deformed, thereby positioning a slit in the tire core and forming the slit with high accuracy.

Useful as the third and fourth molds are those obtained by further sectioning the third and fourth molds **83** and **84** into two parts along an axial direction of the tire. The third and fourth molds may be separated into other numbers than two.

Useable as the material for the intermediate mold parts **83a** and **84a** are a metal such as Al, Cu and Fe. Al has a high heat conductivity and is therefore preferably used to shorten the time required for the later described vulcanizing step. Further, optionally embedded in the peripheral portions of the respective intermediate mold parts **83a** and **84a** as in the production process shown in Figs. **17** and **18** are pipes (not shown) through which fluid flows so as to facilitate heating in the vulcanizing step.

Next, with the resilient portion 86 and the base portion **87** being placed as above, the first to fourth molds **81 - 84** are positioned in a vulcanizing machine (not shown) for molding under a predetermined pressure and temperature. As a result, the resilient portion **86** and the base portion **87** are bonded to each other on their contact surfaces to produce the complete form of a tire core provided with a slit, and the resilient portion **86** has their resilient properties adjusted, thereby completing the tire core having the above-mentioned resilient properties.

After complection of the vulcanizing step, the third and fourth molds **83** and **84** are taken off, and lastly the first and second molds **81** and **82** are removed from the resulting tire core. By the foregoing production process, the tire core having a slit can be produced. In this embodiment, the tire core has a substantially circular cross section, and the third and fourth molds **83** and **84** cover the resilient portion **86** from the outer portion to the inner edge thereof beyond the thickest portion of the tire core. However, since the resilient portion **86** is so elastic and easy to deform that the third and fourth molds **83** and **84** can be removed from the resulting tire core. Especially, immediately after the completion of the vulcanizing step, the resilient portion **86** can more readily be taken out since it is in a high temperature state and soft.

As described above, only using the four molds, it is possible to readily produce a tire core of complicated shape, i.e, a tire core having a slit. Further, since the third and fourth molds **83, 84** have the intermediate mold parts **83a, 84a,** it is possible to form a slit with high accuracy. Further, since the intermediate mold parts **83a** and **84a**, which have the shapes corresponding to the slits of the third and fourth molds **83** and **84**, are inserted into the central portion of the tire core, the inside of the tire core can be heated directly during the vulcanizing step. Accordingly, it is possible to heat the entire tire core in a short time. As a result, the vulcanizing time is shortened to thereby shorten the entire production time. In this embodiment, explanation has been made of a method for producing a tire core having a slit. However, it is also possible to produce the tire core **3** or the like having the circumferential groove **5** according to the same production process if the cross sectional shapes of the intermediate mold parts is modified.

The present invention can be applied to any type of solid tire such as a press-on solid tire, a cure-on solid tire and a pneumatic solid tire. It can find application not only in the solid tires for fork lift trucks, industrial tractors, various low-speed trailers, shovel loaders and the like, but also in the vehicles such as a wheel chair that conventionally uses pneumatic tires.

## Claims

1. A solid tire (A, B, C, D, E, H, I, J) comprising an annular resilient core (3) having an outer surface with a tread (4) and an inner surface on which the rim (2) of a wheel (1) can be fitted, the annular resilient core (3) comprising a void portion extending in a circumferential direction of the tire, the void portion being a circumferential groove (5) formed along the ridge of the core (3) and extending along a radial plane of the core (3)
the groove (5), being located and shaped to enhance resiliency of the tire core (3) against a shock on the ridge of the tire core (3) from a road surface, **characterised in that** the tread (4) has an inner surface which fits on the outer surface of the core (3), the side portions of the tread covering about half of either side of the core (3).

2. A solid tire according to claim 1, wherein the circumferential groove (5) becomes wider towards the rim (2) in the direction of the tire axis.

3. A solid tire according to claim 1, wherein the circumferential groove (5) engages a projection (6) formed on the inner surface of the tread (4).

4. A solid tire according to claim 1, wherein the groove (5) is a slit extending circumferentially on the outer surface of the tire core (3).

5. A solid tire according to any of claims 1-4, wherein the solid tire core (3) further comprises a plurality of grooves (25, 26) formed in the outer surface of the tire core (3) to enhance resiliency thereof.

6. A solid tire according to claim 5, wherein the plurality of grooves (25, 26) become wider toward the outer surface of the tire core (3).

7. A solid tire (3) according to any of claim 1, 4 or 5, further comprising a filler stuffed in the void portion.

8. A solid tire according to any of claim 1, 4 or 5, wherein the tire core (3) is separable into a plurality of core parts (10a, 10b) in the direction of the tire axis.

9. A solid tire according to any of claim 1, 4 or 5, further comprising a wire mesh (9) embedded in the core for enhancing the stiffness of the tire core (3).

10. A solid tire according to any of claim 1, 4 or 5, the core further comprising circumferentially spaced recesses (7) or projections in or on the outer surface for securing the tread (4) on the outer surface of the core (3).

11. A solid tire according to any of claim 1, 4 or 5, the core further comprising circumferentially spaced recesses or projections in or on the inner surface for securing the rim (2) on the inner surface of the core (3).

12. A method of producing a tire core (3) of the solid tire according to any of claims 1-11 **characterized in that** the method comprises:
a first step of preparing, as the parts of the tire core, i) a base portion (58) corresponding to the inner portion of the tire core and ii) first and second resilient halves (56, 57) obtained by separating the outer portion other than the base portion (58) along a plane crossing the rotational axis of the tire;
a second step of placing the first resilient half (56) and the base portion (58) in a first mold (51) having the shape corresponding to one half piece made by separating the tire core (3) along a separating plane crossing a rotational axis of the tire;
a third step of positioning, in the first mold (51), an intermediate mold (53) of the shape corresponding to that of the void portion, the intermediate mold (53) comprising a plurality of separate molds (53a-53c) sectioned along a radial direction of the solid tire;
a fourth step of placing the second resilient half (57) on the first resilient half (56);
a fifth step of positioning a second mold (52) to the first mold (51) and the intermediate mold (53) where the first and second resilient halves (56, 57) and the base portion (58) are placed, the second mold (52) being of the shape corresponding to that of the remaining half of the tire core (3);
a sixth step of vulcanizing the first and second resilient halves (56, 57) and the base portion (58) placed in the first and second molds (51, 52) and the intermediate mold (53); and
a seventh step of taking out the vulcanized tire core (3) from the first and second molds (51, 52) and the intermediate molds (53).

13. A method of producing a tire core (3) according to claim 12 wherein the plurality of separate molds (51-53) each comprise an engaging member for engaging an adjacent separate mold.

14. A method of producing a tire core (3) of the solid tire according to any of claims 1-11
a first step of preparing, as the parts of the tire core (3), a base portion (87) corresponding to the inner portion of the tire core (3) and a resilient portion (86) corresponding to the outer portion other than the base portion (87) of the tire core (3);
a second step of sandwiching and positioning the base portion (87) between a first mold (81) and a second mold (82) in the axial direction of the tire, which molds form a molding space corresponding to at least a part of the base portion when mated together;
a third step of placing the resilient portion (86) on the base portion (87) placed in the first and second molds (81, 82);
a fourth step of positioning a third mold (83) and a fourth mold (84) over the first and second molds (81, 82) where the base portion (87) and the resilient portion (86) are placed, the third and fourth molds (83, 84) making an annular hollow portion corresponding to the outer portion (86) of the tire core (3) when the molds are mated together and being separable along a plane extending along the rotational axis of the tire;
a fifth step of vulcanizing the resilient portion (86) and the base portion (87) placed in the first to fourth molds (81-84); and
a sixth step of taking out the vulcanized tire core (3) from the first to fourth molds (81-84).

## Patentansprüche

1. Vollreifen (A, B, C, D, E, H, I, J), welcher einen ringförmigen, nachgiebig federnden bzw. rückstellfähigen Kern (3) aufweist, der eine Außenfläche mit einer Lauffläche bzw. Laufdecke (4) und eine Innenfläche aufweist, an der die Felge (2) eines Rades (1) angebracht werden kann, wobei der ringförmige, rückstellfähige Kern (3) einen hohlen Bereich aufweist, der sich in einer Umfangsrichtung des Reifens erstreckt, wobei der hohle Bereich eine Umfangsnut (5) ist, die entlang des Rückens des Kerns (3) gebildet ist und sich entlang einer radialen Ebene des Kerns (3) erstreckt, und wobei die Nut (5) angeordnet und ausgestaltet ist, um die Rückstellfähigkeit des Reifenkerns (3) gegen einen Stoss an dem Rücken des Reifenkerns (3) von einer Strassenoberfläche bzw. Fahrbahn zu steigern, **dadurch gekennzeichnet, dass** die Lauffläche (4) eine Innenfläche aufweist, die an die Außenfläche des Kerns (3) passt, wobei die Seitenbereiche der Lauffläche etwa die Hälfte jeder Seite des Kerns (3) bedecken.

2. Vollreifen nach Anspruch 1, bei dem die Umfangsnut (5) zu der Felge (2) hin in der Richtung der Reifenachse weiter bzw. breiter wird.

3. Vollreifen nach Anspruch 1, bei dem die Umfangsnut (5) mit einem an der Innenfläche der Lauffläche (4) gebildeten Vorsprung (6) in Eingriff ist.

4. Vollreifen nach Anspruch 1, bei dem die Nut (5) ein Schlitz ist, der sich umfangsmäßig bzw. über einen Umfang an der Außenfläche des Reifenkerns (3) erstreckt.

5. Vollreifen nach einem der Ansprüche 1 bis 4, bei dem der Vollreifenkern (3) weiterhin eine Mehrzahl von Nuten (25, 26) aufweist, die in der Außenfläche des Reifenkerns (3) gebildet sind, um dessen Rückstellfähigkeit zu steigern.

6. Vollreifen nach Anspruch 5, bei dem die Mehrzahl von Nuten (25, 26) zu der Außenfläche des Reifenkerns (3) hin weiter bzw. breiter wird.

7. Vollreifen (3) nach einem der Ansprüche 1, 4 oder 5, weiterhin einen Füllstoff bzw. Füllmittel aufweisend, das in den hohlen Bereich gestopft ist.

8. Vollreifen nach einem der Ansprüche 1, 4 oder 5, bei dem der Reifenkern (3) in eine Mehrzahl von Kernteilen (10a, 10b) in der Richtung der Reifenachse trennbar ist.

9. Vollreifen nach einem der Ansprüche 1, 4 oder 5, weiterhin ein Drahtgeflecht (9) aufweisend, das in dem Kern zum Steigern der Steifigkeit des Reifenkerns (3) eingebettet ist.

10. Vollreifen nach einem der Ansprüche 1, 4 oder 5, bei dem der Kern weiterhin umfangsmäßig bzw. über den Umfang beabstandete Ausnehmungen (7) oder Vorsprünge in oder an der Außenfläche zum Befestigen der Lauffläche (4) an der Außenfläche des Kerns (3) aufweist.

11. Vollreifen nach einem der Ansprüche 1, 4 oder 5, bei dem der Kern weiterhin umfangsmäßig bzw. über den Umfang beabstandete Ausnehmungen oder Vorsprünge in oder an der Innenfläche zum Befestigen der Felge (2) an der Innenfläche des Kerns (3) aufweist.

12. Verfahren zum Herstellen eines Reifenkerns (3) des Vollreifens entsprechend einem der Ansprüche 1 bis 11, **dadurch gekennzeichnet, dass** das Verfahren aufweist:
einen ersten Schritt des Herstellens als die Teile des Reifenkerns: i) eines Basisbereichs (58) entsprechend dem inneren Bereich des Reifenkerns und ii) einer ersten und zweiten nachgiebig federnden bzw, rückstellfähigen Hälfte (56, 57), die durch Trennen des von dem Basisbereich (58) verschiedenen Außenbereichs entlang einer Ebene erhalten werden, welche die Rotations- bzw. Drehachse des Reifens schneidet;
einen zweiten Schritt des Platzierens der ersten rückstellfähigen Hälfte (56) und des Basisbereichs (58) in einer ersten Form (51) mit der Gestalt, welche dem einen halben Teil entspricht, das durch Trennen des Reifenkerns (3) entlang einer Trennebene hergestellt ist, welche eine Rotations- bzw. Drehachse des Reifens schneidet;
einen dritten Schritt des Positionierens einer Zwischenform (53) in der ersten Form (51), wobei die Zwischenform (53) eine Gestalt aufweist, die derjenigen des hohlen Bereichs entspricht, und wobei die Zwischenform (53) eine Mehrzahl von getrennten Formen (53a bis 53c) aufweist, welche entlang einer radialen Richtung des Vollreifens unterteilt sind;
einen vierten Schritt des Platzierens der zweiten rückstellfähigen Hälfte (57) an der ersten rückstellfähigen Hälfte (56);
einen fünften Schritt des Positionierens einer zweiten Form (52) an der ersten Form (51) und der Zwischenform (53), wo die erste und zweite rückstellfähige Hälfte (56, 57) und der Basisbereich (58) platziert sind, wobei die zweite Form (52) die Gestalt aufweist, welche derjenigen der verbleibenden Hälfte des Reifenkems (3) entspricht;
einen sechsten Schritt der Vulkanisation der ersten und zweiten rückstellfähigen Hälfte (56, 57) und des Basisbereichs (58), welche in der ersten und zweiten Form (51, 52) und der Zwischenform (53) platziert sind; und
einen siebten Schritt des Entnehmens des vulkanisierten Reifenkems (3) aus der ersten oder zweiten Form (51, 52) und den Zwischenformen (53).

13. Verfahren zum Herstellen eines Reifenkerns (3) entsprechend Anspruch 12, bei dem die Mehrzahl von getrennten Formen (51 bis 53) jeweils ein Eingriffselement zum Ineingriffkommen mit einer benachbarten bzw. angrenzenden, getrennten Form aufweist.

14. Verfahren zum Herstellen eines Reifenkerns (3) des Vollreifens entsprechend einem der Ansprüche 1 bis 11, **dadurch gekennzeichnet, dass** das Verfahren aufweist:
einen ersten Schritt des Herstellens, als die Teile des Reifenkems (3), eines Basisbereichs (87), der dem inneren Bereich des Reifenkerns (3) entspricht, und eines nachgiebig federnden bzw. rückstellfähigen Bereichs (86), der dem von dem Basisbereich (87) des Reifenkerns (3) verschiedenen Außenbereich entspricht;
einen zweiten Schritt des Dazwischenanordnens und Positionierens des Basisbereichs (87) zwischen einer ersten Form (81) und einer zweiten Form (82) in der axialen Richtung des Reifens, welche Formen einen Formungsraum entsprechend wenigstens einem Teil des Basisbereichs bilden, wenn zusammengepasst;
einen dritten Schritt des Platzierens des rückstellfähigen Bereichs (86) an dem Basisbereich (87), der in der ersten und der zweiten Form (81, 82) platziert ist;
einen vierten Schritt des Positionierens einer dritten Form (83) und einer vierten Form (84) über bzw. auf der ersten und der zweiten Form (81, 82), wo der Basisbereich (87) und der rückstellfähige Bereich (86) platziert sind, wobei die dritte und vierte Form (83, 84) einen ringförmigen hohlen Bereich bilden, welcher dem Außenbereich (86) des Reifenkerns (3) entspricht, wenn die Formen zusammengepasst sind, und entlang einer Ebene trennbar sind, die sich entlang der Rotations- bzw. Drehachse des Reifens erstreckt;
einen fünften Schritt der Vulkanisation des rückstellfähigen Bereichs (86) und des Basisbereichs (87), welche in der ersten bis vierten Form (81 bis 84) platziert sind; und
einen sechsten Schritt des Entnehmens des vulkanisierten Reifenkerns (3) aus der ersten bis vierten Form (81 bis 84).

## Revendications

1. Pneumatique plein (A, B, C, D, E, H, I, J) comprenant un noyau résilient annulaire (3) présentant une surface extérieure avec une bande de roulement (4) et une surface intérieure sur laquelle la jante (2) d'une roue (1) peut être mise en place, le noyau (3) résilient annulaire comprenant une partie vide s'étendant dans une direction circonférentielle du pneumatique, la partie vide étant une rainure circonférentielle (5) formée le long du bord du noyau (3) et s'étendant le long d'un plan radial du noyau (3),
la rainure (5), étant placée et formée pour accroître la résilience du noyau de pneumatique (3) contre un choc sur le bord du noyau de pneumatique (3) provenant d'une surface de roulement,
**caractérisé en ce que** la bande de roulement (4) présente une surface intérieure qui s'installe sur la surface extérieure du noyau (3), les parties latérales de la bande de roulement couvrant environ la moitié de l'un ou l'autre côté du noyau (3).

2. Pneumatique plein selon la revendication 1, dans lequel la rainure circonférentielle (5) devient plus large vers la jante (2) dans la direction de l'axe du pneumatique.

3. Pneumatique plein selon la revendication 1, dans lequel la rainure circonférentielle (5) se met en prise avec une projection (6) formée sur la surface intérieure de la bande de roulement (4).

4. Pneumatique plein selon la revendication 1, dans lequel la rainure (5) est une fente s'étendant de manière circonférentielle sur la surface extérieure du noyau de pneumatique (3).

5. Pneumatique plein selon l'une quelconque des revendications 1-4, dans lequel le noyau de pneumatique plein (3) comprend, en outre, une pluralité de rainures (25, 26) formées dans la surface extérieure du noyau de pneumatique (3) pour accroître la résilience dudit noyau de pneumatique.

6. Pneumatique plein selon la revendication 5, dans lequel la pluralité de rainures (25, 26) devient plus large vers la surface extérieure du noyau de pneumatique (3).

7. Pneumatique plein selon la revendication 1, 4 ou 5, comprenant, en outre, une matière de remplissage placée dans la partie vide.

8. Pneumatique plein selon l'une quelconque des revendications 1, 4 ou 5, dans lequel le noyau de pneumatique (3) peut être divisé en une pluralité de parties de noyau (10a, 10b) dans la direction de l'axe du pneumatique.

9. Pneumatique plein selon l'une quelconque des revendications 1, 4 ou 5, comprenant, en outre, une toile métallique (9) logée dans le noyau en vue d'accroître la raideur du noyau de pneumatique (3).

10. Pneumatique plein selon l'une quelconque des revendications 1, 4 ou 5, le noyau comprenant, en outre, des évidements (7) espacés de manière circonférentielle ou des projections dans ou sur la surface extérieure en vue de fixer le bandage pneumatique (4) sur la surface extérieure du noyau (3).

11. Pneumatique plein selon l'une quelconque des revendications 1, 4 ou 5, le noyau comprenant, en outre, des évidements espacés de manière circonférentielle ou des projections dans ou sur la surface extérieure en vue de fixer la jante sur la surface intérieure du noyau (3).

12. Procédé de production d'un noyau de pneumatique (3) du pneumatique plein selon l'une quelconque des revendications, **caractérisé en ce que** le procédé comprend :
une première étape de préparation, comme parties du noyau de pneumatique, i) d'une partie de base (58) correspondant à la partie intérieure du noyau de pneumatique et ii) de première et seconde moitiés résilientes (56, 57) obtenues en séparant la partie extérieure autre que la partie de base (58) le long d'un plan traversant l'axe de rotation du pneumatique ;
une seconde étape de placement de la première moitié résiliente (56) et de la partie de base (58) dans un premier moule (51) présentant la forme correspondant à une demi-pièce réalisée en séparant le noyau de pneumatique (3) le long d'un plan de séparation traversant un axe de rotation du pneumatique ;
une troisième étape de positionnement , dans le premier moule (51), d'un moule intermédiaire (53) de forme correspondant à celle de la partie vide, le moule intermédiaire (53) comprenant une pluralité de moules séparés (53a-53c) sectionnés le long d'une direction radiale du pneumatique plein ;
une quatrième étape de positionnement de la seconde moitié résiliente (57) sur la première moitié résiliente (56) ;
une cinquième étape de positionnement d'un second moule (52) sur le premier moule (51) et le moule intermédiaire (53) où les première et seconde moitiés résilientes (56, 57) et la partie de base (58) sont placées, le second moule (52) étant de la forme correspondant à celle de la moitié restante du noyau de pneumatique (3) ;
une sixième étape de vulcanisation des première et seconde moitiés (56, 57) et de la partie de base (58) placées dans les premier et second moules (51, 52) et le moule intermédiaire (53) ; et
une septième étape de sortie du noyau de pneumatique (3) des premier et second moules (51, 52) et des moules intermédiaires (53).

13. Procédé de production d'un noyau de pneumatique (3) selon la revendication 12, dans lequel la pluralité de moules (51-53) comprennent chacun un élément de mise en prise afin de mettre en prise un moule adjacent séparé.

14. Procédé de production d'un noyau de pneumatique (3) du pneumatique plein selon l'une quelconque des revendication 1-11, **caractérisé en ce que** le procédé comprend :
une première étape de préparation, comme parties du noyau de pneumatique, i) d'une partie de base (87) correspondant à la partie intérieure du noyau de pneumatique (3) et une partie résiliente (86) correspondant à la partie extérieure autre que la partie de base (87) du noyau de pneumatique (3) ;
une seconde étape de placement en sandwich et de positionnement de la partie de base (87) entre un premier moule (81) et un second moule (82) dans la direction axiale du pneumatique, lesquels moules forment un espace de moulage correspondant à au moins une partie de la partie de base lorsqu'ils sont accouplés ;
une troisième étape de positionnement d'un troisième moule (83) et d'un quatrième moule (84) sur les premier et second moules (81, 82) où la partie de base (87) et la partie résiliente (86) sont placées, les troisième et quatrième moules (83, 84) formant une partie creuse annulaire correspondant à la partie extérieure (86) du noyau de pneumatique (3) lorsque les moules sont accouplés ensemble et étant séparables le long d'un plan s'étendant le long de l'axe de rotation du pneumatique ;
une cinquième étape de vulcanisation de la partie résiliente (86) et de la partie de base (87) placées à l'intérieur du premier au quatrième moule (81-84) ; et
une sixième étape de sortie du noyau de pneumatique vulcanisé (3) du premier au quatrième moule (81-84).
